# EUROPEAN PATENT SPECIFICATION

(11) **EP 4 040 696 B1**
(45) Date of publication and mention of the grant of the patent: **27.11.2024**
(21) Application number: 19947558.3
(22) Date of filing: 03.10.2019
(51) Int. Cl.: H04L 1/16, H04W 28/04, H04W 72/04, H04W 72/12, H04L 1/1829

(54) **TERMINAL AND WIRELESS COMMUNICATION METHOD**
ENDGERÄT UND DRAHTLOSKOMMUNIKATIONSVERFAHREN
TERMINAL ET PROCÉDÉ DE COMMUNICATION SANS FIL

(43) Date of publication of application: 10.08.2022
(73) Proprietor: NTT DOCOMO, INC., Chiyoda-Ku Tokyo 100-6150 (JP)
(72) Inventor: TAKAHASHI, Yuki, Tokyo 100-6150 (JP); NAGATA, Satoshi, Tokyo 100-6150 (JP); ZHANG, Xiaohong, Beijing 100190 (CN); GUO, Shaozhen, Beijing 100190 (CN); WANG, Lihui, Beijing 100190 (CN); HOU, Xiaolin, Beijing 100190 (CN)
(74) Representative: Hoffmann Eitle
(86) International application number: PCT/JP2019/039197
(87) International publication number: WO 2021/064961

(56) References cited:
- EP-A1- 3 480 995
- US-A1- 2019 254 110
- NTT DOCOMO ET AL: "Discussions on DL SPS enhancement and UL intra-UE transmission prioritization/multiplexing", vol. RAN WG1, no. Prague, CZ; 20190826 - 20190830, 17 August 2019 (2019-08-17), XP051765804, Retrieved from the Internet <URL:http://www.3gpp.org/ftp/tsg_ran/WG1_RL1/TSGR1_98/Docs/R1-1909199.zip> [retrieved on 20190817]
- QUALCOMM INCORPORATED: "Remaining Design Details for URLLC Downlink SPS", vol. RAN WG1, no. Prague, Czech Republic; 20190826 - 20190830, 17 August 2019 (2019-08-17), XP051765875, Retrieved from the Internet <URL:http://www.3gpp.org/ftp/tsg_ran/WG1_RL1/TSGR1_98/Docs/R1-1909270.zip> [retrieved on 20190817]
- INSTITUTE FOR INFORMATION INDUSTRY (III): "Discussion on DL SPS enhancements", vol. RAN WG1, no. Prague, CZ; 20190826 - 20190830, 16 August 2019 (2019-08-16), XP051765711, Retrieved from the Internet <URL:http://www.3gpp.org/ftp/tsg_ran/WG1_RL1/TSGR1_98/Docs/R1-1909108.zip> [retrieved on 20190816]
- NTT DOCOMO, INC.: "Discussions on DL SPS enhancement and UL intra-UE transmission prioritization/multiplexing", 3GPP TSG RAN WG1#98 R1-1909199, vol. RAN WG1, 17 August 2019 (2019-08-17), XP051765804
- QUALCOMM INCORPORATED: "Remaining Design Details for URLLC Downlink SPS", 3GPP TSG RAN WG1#98 R1-1909270, vol. RAN WG1, 17 August 2019 (2019-08-17), XP051765875
- INSTITUTE FOR INFORMATION INDUSTRY(III): "Discussion on DL SPS enhancements", 3GPP TSG RAN WG1#98 R1-1909108, vol. RAN WG1, 16 August 2019 (2019-08-16), XP051765711
- ZTE: "Other enhancements for Rel-16 URLLC", 3GPP TSG RAN WG1#98 R1-1908241, vol. RAN WG1, 17 August 2019 (2019-08-17), XP051764855
- ANONYMOUS: "3rd Generation Partnership Project; Technical Specification Group Radio Access Network; NR; Physical layer procedures for control (Release 15)", 3GPP TS38.213, vol. RANWG1, no. V15.7.0, 28 September 2019 (2019-09-28), pages 40 - 45, XP051785089

## Description

### Technical Field

The present disclosure relates to a terminal and a radio communication method in next-generation mobile communication systems.

### Background Art

In the universal mobile telecommunications system (UMTS) network, the specifications of long term evolution (LTE) have been drafted for the purpose of further increasing data rates, providing low delays, and so on (see Non Patent Literature 1). In addition, the specifications of LTE-Advanced (third generation partnership project (3GPP) Release (Rel) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010 NTT DOCOMO ET AL: "Discussions on DL SPS enhancement and UL intra-UE transmission prioritization/multiplexing", 3GPP DRAFT; R1-1909199, 17 August 2019. R1-1909199 discloses that for Type-1 HARQ-ACK codebook, HARQ-ACK bit(s) are determined first in increasing order of the candidate PDSCH reception occasion index and then in increasing order of serving cell index where candidate PDSCH reception occasion is derived based on the RRC configured K1 values and the PDSCH time domain resource allocation table, etc.

QUALCOMM INCORPORATED: "Remaining Design Details for URLLC Downlink SPS", 3GPP DRAFT; R1-1909270 REMAINING DESIGN DETAILS FOR URLLC DOWNLINK SPS. R1-1909270 discloses that the position of A/N bits is determined based on the CC index first and within each CC based on each SPS occasion in the case of SPS only and multiple HARQ-ACK bits corresponding to different SPS occasions are being multiplexed into the same codebook.

### Summary of Invention

The present invention is defined by the independent claims. Preferred embodiment is defined by the dependent claim. Further aspects are provided for facilitating the understanding of the invention.

### Advantageous Effects of Invention

According to one aspect of the present disclosure, the HARQ-ACK can be appropriately feed back even in a case where multiple SPSs are used.

### Brief Description of Drawings

Fig. 1 is a diagram illustrating an example of an uplink (UL) slot-based hybrid automatic repeat request acknowledgement (HARQ-ACK) codebook.
Fig. 2 is a diagram illustrating an example of the UL slot-based HARQ-ACK codebook.
Figs. 3A and 3B are diagrams illustrating an example of an arrangement order of bits of the UL slot-based HARQ-ACK codebook.
Fig. 4 is a diagram illustrating an example of a semi-static HARQ-ACK codebook in a case where the same numerology is configured for downlink (DL) and UL.
Fig. 5 is a diagram illustrating an example of the semi-static HARQ-ACK codebook in a case where a numerology for DL is smaller than a numerology for UL.
Fig. 6 is a diagram illustrating an example of the semi-static HARQ-ACK codebook in a case where the numerology for DL is greater than the numerology for UL.
Fig. 7 is a diagram illustrating an example of the semi-static HARQ-ACK codebook in a case where the same numerology is configured for DL and UL.
Fig. 8 is a diagram illustrating an example of an HARQ-ACK bit for a semi-persistent scheduling (SPS) physical downlink shared channel (PDSCH) in a case where only one SPS configuration is activated in one arbitrary serving cell over one or more component carriers (CC) in one cell group.
Figs. 9A and 9B are diagrams illustrating an example of an arrangement order in the semi-static HARQ-ACK codebook.
Figs. 10A and 10B are diagrams illustrating an example of an arrangement order in the semi-static HARQ-ACK codebook.
Figs. 11A and 11B are diagrams illustrating an example of an arrangement order in the semi-static HARQ-ACK codebook.
Figs. 12A and 12B are diagrams illustrating an example of an arrangement order in the semi-static HARQ-ACK codebook.
Figs. 13A and 13B are diagrams illustrating an example of an arrangement order in the semi-static HARQ-ACK codebook.
Figs. 14A and 14B are diagrams illustrating an example of an arrangement order in the semi-static HARQ-ACK codebook.
Figs. 15A and 15B are diagrams illustrating an example of an arrangement order in the semi-static HARQ-ACK codebook.
Figs. 16A and 16B are diagrams illustrating an example of an arrangement order in the semi-static HARQ-ACK codebook.
Fig. 17 is a diagram illustrating an example of a schematic configuration of a radio communication system according to one embodiment.
Fig. 18 is a diagram illustrating an example of a configuration of a base station according to one embodiment.
Fig. 19 is a diagram illustrating an example of a configuration of a user terminal according to one embodiment.
Fig. 20 is a diagram illustrating an example of a hardware configuration of the base station and the user terminal according to one embodiment.

### Description of Embodiments

### (SPS)

In New Radio (NR), transmission and reception based on semi-persistent scheduling (SPS) are used. In the present disclosure, the SPS may be replaced with downlink (DL) SPS.

A UE may activate or deactivate (release) an SPS configuration based on a downlink control channel (physical downlink control channel (PDCCH)). Based on the activated SPS configuration, the UE may receive a downlink shared channel (physical downlink shared channel (PDSCH)) of the corresponding SPS.

Incidentally, in the present disclosure, the PDCCH may be replaced with downlink control information (DCI) transmitted by using the PDCCH, simply DCI, or the like. Furthermore, in the present disclosure, the SPS, an SPS PDSCH, the SPS configuration, an SPS occasion, SPS reception, SPS PDSCH reception, SPS scheduling, and the like may be replaced with one another.

The DCI for activating or deactivating the SPS configuration may be referred to as SPS activation DCI (or SPS assignment DCI), SPS deactivation DCI, or the like. The SPS deactivation DCI may be referred to as SPS release DCI, simply SPS release, or the like.

The DCI may include cyclic redundancy check (CRC) bits scrambled by a given RNTI (for example, a configured scheduling radio network temporary identifier (CS-RNTI)).

The DCI may have a DCI format for physical uplink shared channel (PUSCH) scheduling (for example, DCI format 0_0 or 0_1), a DCI format for PDSCH scheduling (for example, DCI format 1_0 or 1_1), or the like. The DCI in which a plurality of fields indicate given bit strings may indicate the SPS activation DCI or the SPS release DCI.

The SPS configuration (which may be referred to as configuration information regarding the SPS) may be configured in the UE by using higher layer signaling.

In the present disclosure, higher layer signaling may be, for example, any of radio resource control (RRC) signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), or the like.

The configuration information regarding the SPS (for example, an "SPS-Config" information element of RRC) may include an index (SPS index) for identifying the SPS, information (for example, SPS period) regarding resources of the SPS, information regarding a physical uplink control channel (PUCCH) resource for the SPS, and the like.

The UE may determine a length, a start symbol, and the like of the SPS based on a time domain allocation field of the SPS activation DCI.

The SPS may be configured in a special cell (SpCell) (for example, a primary cell (PCell) or a primary secondary cell (PSCell)) or may be configured in a secondary cell (SCell).

However, the existing Rel-15 NR has a specification in which the SPS is not configured for more than one serving cell at the same time per one cell group (that is, one SPS configuration per cell group). Only one SPS configuration may be allowed (configured) for each bandwidth part (BWP) of a serving cell.

Note that, in the present disclosure, the SPS PDSCH associated with the activation DCI may mean the first SPS PDSCH to be activated (triggered) by the activation DCI. The SPS PDSCH associated with the activation DCI may be referred to as an SPS PDSCH with the associated DCI, an SPS PDSCH with the corresponding PDCCH, an SPS PDSCH indicated by the DCI, an SPS PDSCH with the activation DCI, or the like.

Furthermore, in the present disclosure, the SPS PDSCH that is not associated with the activation DCI may mean the second and subsequent SPS PDSCHs activated by the activation DCI. The SPS PDSCH that is not associated with the activation DCI may be referred to as an SPS PDSCH without the associated DCI (PDCCH), an SPS PDSCH without the corresponding DCI (PDCCH), an SPS PDSCH without the activation DCI, or the like.

### (HARQ-ACK Codebook)

The UE may transmit hybrid automatic repeat request acknowledgement (HARQ-ACK) feedback by using one PUCCH resource for every HARQ-ACK codebook including one or more delivery acknowledgement information (for example, HARQ-ACK) bits. The HARQ-ACK bits may be referred to as HARQ-ACK information, HARQ-ACK information bits, or the like.

Here, the HARQ-ACK codebook may include bits for the HARQ-ACKs in at least one unit of a time domain (for example, a slot), a frequency domain (for example, CC), a spatial domain (for example, a layer), a transport block (TB), and a code block group (CBG) constituting the TB. The HARQ-ACK codebook may be simply referred to as a codebook.

Note that the number (size) of bits included in the HARQ-ACK codebook or the like may be determined in a semi-static or dynamic manner. The HARQ-ACK codebook of which the size is determined semi-statically is also referred to as, for example, a semi-static HARQ-ACK codebook or a type-1 HARQ-ACK codebook. The HARQ-ACK codebook of which the size is determined dynamically is also referred to as, for example, a dynamic HARQ-ACK codebook or a type-2 HARQ-ACK codebook.

Which one of the type-1 HARQ-ACK codebook and the type-2 HARQ-ACK codebook is to be used may be set in the UE by using a higher layer parameter (for example, pdsch-HARQ-ACK-codebook) .

For the type-1 HARQ-ACK codebook, the UE may feed back, in a given range (for example, a range set based on the higher layer parameter), the HARQ-ACK bit for a candidate PDSCH (or PDSCH occasion) corresponding to the given range, regardless of whether or not there is PDSCH scheduling.

The given range may be determined based on at least one of a given period (for example, a set of a given number of occasions for receiving the candidate PDSCH or a given number of monitoring occasions of the PDCCH), the number of CCs configured or activated in the UE, the number of TBs (layer number or rank), the number of CBGs per one TB, or the presence or absence of application of spatial bundling. The given range is also referred to as a HARQ-ACK window, a HARQ-ACK bundling window, a HARQ-ACK feedback window, and the like.

In the type-1 HARQ-ACK codebook, the UE reserves the HARQ-ACK bit for the PDSCH in the codebook if they are within the given range even in a case where the PDSCH is not scheduled for the UE. In a case where it is determined that the PDSCH is not actually scheduled, the UE can feed back the bit as a NACK bit.

Meanwhile, in a case of the type-2 HARQ-ACK codebook, the UE may feed back the HARQ-ACK bit for the PDSCH that is scheduled within the given range.

Specifically, the UE may determine the number of bits of the type-2 HARQ-ACK codebook based on a given field (for example, a DL assignment indicator (index) (DAI) field) in the DCI. Note that the DAI field may include a counter DAI (C-DAI) and a total DAI (T-DAI).

The C-DAI may indicate a counter value of downlink transmission (PDSCH, data, and TB) scheduled within a given period. For example, the C-DAI in the DCI for scheduling data within the given period may indicate the number counted in the frequency domain (for example, the CC) first and then in the time domain within the given period. For example, the C-DAI may correspond to a value obtained by counting the number of PDSCH receptions or SPS releases in ascending order of a serving cell index and then in ascending order of a PDCCH monitoring occasion for one or more pieces of DCI included in the given period.

The T-DAI may indicate a total value (total number) of pieces of data scheduled within the given period. For example, the T-DAI in the DCI for scheduling data in a given time unit (for example, the PDCCH monitoring occasion) within the given period may indicate the total number of pieces of data scheduled up to the time unit (also referred to as a point, a timing, or the like) within the given period.

### (SPS and HARQ-ACK Codebook)

For the type-1 HARQ-ACK codebook of Rel-15 NR, the UE places the HARQ-ACK bits corresponding to the SPS PDSCH and the SPS release in the HARQ-ACK codebook in the same manner as the HARQ-ACK bits corresponding to a dynamic PDSCH (for example, according to a list (table) regarding time domain resource allocation). There is no difference in handling between the SPS PDSCH, the SPS release, and the dynamic PDSCH corresponding to PDSCH reception occasions within the given period.

Note that the dynamic PDSCH may mean a PDSCH dynamically scheduled by using the DCI (for example, DCI formats 1_0, 1_1, and the like).

Further, in the existing Rel-15 NR, for the type 2 HARQ-ACK codebook, the UE may place the HARQ-ACK bit corresponding to the SPS PDSCH after the HARQ-ACK codebook corresponding to a dynamic TB-based PDSCH.

Further, in the existing Rel-15 NR, the UE does not expect to transmit HARQ-ACK information for more than one SPS PDSCH reception on the same PUCCH.

Note that, in the existing Rel-15 NR, the HARQ-ACK bit corresponding to the SPS PDSCH may be placed after the HARQ-ACK codebook corresponding to the dynamic TB-based PDSCH.

Meanwhile, in the Rel-16 NR or later, for more flexible control, it has been studied to configure multiple SPSs in one cell group. The UE may utilize multiple SPS configurations for one or more serving cells. In addition, a minimum SPS period in the existing Rel-15 NR is 10 ms, but introduction of a shorter SPS period (for example, a given number of symbol units, slot units, or the like) has also been considered.

In this case, more than one piece of HARQ-ACK information for multiple SPSs may be required to be included in one HARQ-ACK codebook. However, how to configure the HARQ-ACK codebook for multiple SPSs has not yet been studied. For example, a HARQ-ACK codebook size for the SPS PDSCH without the associated PDCCH, a sequence of the HARQ-ACK bits in the HARQ-ACK codebook, and the like are not clearly defined. If the HARQ-ACK codebook for multiple SPSs is not clearly defined, appropriate HARQ control cannot be performed in a case where multiple SPSs are used, and the communication throughput may be deteriorated.

In this regard, the present inventors have conceived a method for appropriately feeding back the HARQ-ACK even in a case where multiple SPSs are used.

Hereinafter, embodiments according to the present disclosure will be described in detail with reference to the drawings. A radio communication method according to each embodiment may be applied independently, or may be applied in combination with others.

### (Radio Communication Method)

### <First Embodiment>

A first embodiment relates to a codebook size of the dynamic HARQ-ACK codebook for the SPS PDSCH and an arrangement order of HARQ-ACKs for respective SPS PDSCHs in the codebook.

### [Codebook Size of Dynamic HARQ-ACK Codebook]

The codebook size of the dynamic HARQ-ACK codebook for the SPS PDSCH may be determined based on an active SPS configuration and a HARQ-ACK timing value K_{1,k} indicated by activation DCI corresponding to the active SPS configuration.

In a set of possible values of a HARQ-ACK transmission timing (which may also be referred to as PDSCH-to-HARQ feedback timing, K₁, or the like) specified by the activation DCI, in a case where these values are arranged in descending order, K_{1,k} may mean a k-th value (k ≥ 0).

Note that K₁ may correspond to a value based on a slot of the CC on which the PUCCH is transmitted. K₁ may be converted from a value based on the slot of the CC on which the SPS PDSCH is received to a value based on the slot of the CC on which the PUCCH is transmitted.

K₁ for the SPS PDSCH that is not associated with the activation DCI may be specified by a PDSCH-to-HARQ feedback timing indicator field included in the activation DCI by which the SPS is activated.

The PDSCH-to-HARQ feedback timing corresponds to a timing indication field for a HARQ corresponding to the PDSCH. When the last slot that has received the PDSCH is defined as n, the UE may transmit the HARQ-ACK corresponding to the PDSCH in an n+K₁ slot. Note that the PDSCH-to-HARQ feedback timing may be referred to as a PDSCH-to-HARQ-ACK feedback timing.

For example, values 0 to 7 of the PDSCH-to-HARQ feedback timing indicator included in the DCI format 1_0 may each correspond to K₁ = 1 to 8 [slot], respectively.

For values 0 to 7 of the PDSCH-to-HARQ feedback timing indicator included in the DCI format 1_1, a value of the number of slots configured by higher layer signaling (RRC parameter "dl-DataToUL-ACK") may be determined.

Note that the above-described PDSCH-to-HARQ feedback timing may be indicated not in a slot unit but in, for example, a subslot unit.

For example, the HARQ-ACK codebook in the UL slot n may include the HARQ-ACK information for the SPS PDSCH without the activation DCI, for which transmission in the same UL slot n is indicated by the HARQ-ACK timing value K_{1,k} of the corresponding activation DCI. In this case, K_{1,k} may be in a slot unit.

The HARQ-ACK codebook in a UL subslot n may include the HARQ-ACK information for the SPS PDSCH without the activation DCI, for which transmission in the same UL subslot n is indicated by the HARQ-ACK timing value K_{1,k} of the corresponding activation DCI. In this case, K_{1,k} may be in a subslot unit.

In a case of supporting both the UL slot-based HARQ-ACK codebook and the UL subslot-based HARQ-ACK codebook, the UE may determine which codebook to use based on higher layer signaling (for example, the RRC parameter or the MAC parameter), physical layer signaling (for example, the DCI), or a combination thereof.

For example, multiple SPS configurations may be classified into two groups, one group may correspond to the UL slot-based HARQ-ACK codebook, and the other group may correspond to the UL subslot-based HARQ-ACK codebook. One SPS configuration may be associated with only one group.

For the UE, information regarding use of the UL slot-based HARQ-ACK codebook or UL subslot-based HARQ-ACK codebook may be explicitly configured or implicitly configured. In the latter case, the UE may determine whether the HARQ-ACK codebook corresponding to the SPS configuration is the UL slot-based HARQ-ACK codebook or the UL subslot-based HARQ-ACK codebook based on an RRC parameter "n1PUCCH-AN" indicating a PUCCH resource of the SPS configuration.

The UE may determine which one of the UL slot-based HARQ-ACK codebook and the UL subslot-based HARQ-ACK codebook to use, as indicated by a field included in the activation DCI or based on at least one of an SPS index, the SPS period, or the like.

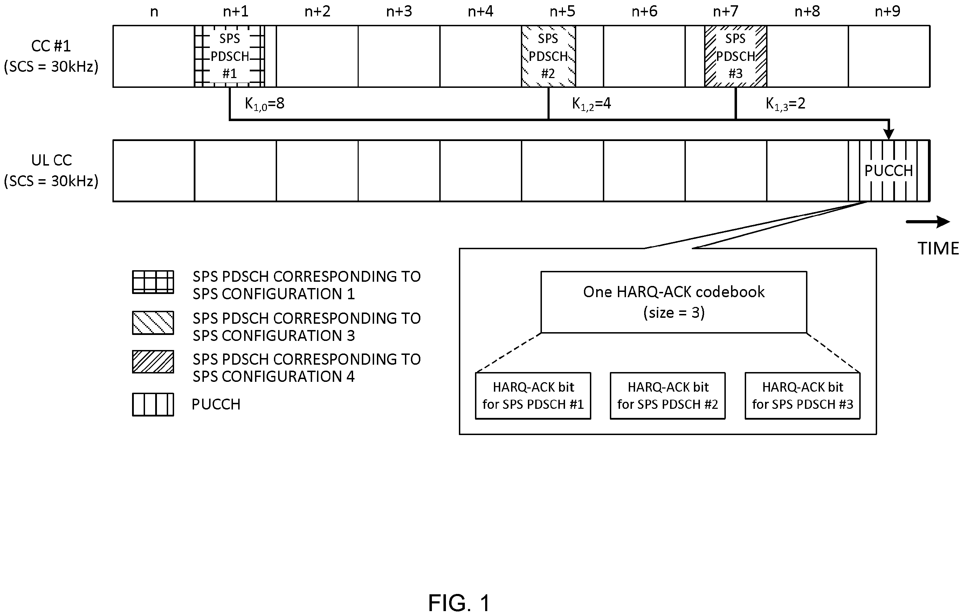

Fig. 1 is a diagram illustrating an example of the UL slot-based HARQ-ACK codebook. In this example, multiple SPS configurations (SPS configurations 1 to 4) configured for one serving cell (CC #1) are configured for the UE. Parameters (the SPS period and the like) of each SPS configuration may be the same as or different from each other.

Fig. 1 illustrates an example in which a carrier for receiving the SPS PDSCH and a carrier for transmitting the corresponding HARQ-ACK codebook are different on the assumption that CC #1 is a DL carrier and that UL CC is a UL carrier, but the present invention is not limited thereto. CC #1 and UL CC may actually be the same carriers (for example, carriers of a time division duplex (TDD) band). It is assumed that CC #2 appearing in the following drawings is a DL carrier, but the present invention is not limited thereto.

Note that each CC in Fig. 1 may be assumed to have a subcarrier spacing (SCS) of 30 kHz (that is, slot length = 0.5 ms). In other drawings of the present disclosure, it may be assumed that the SCS for the CC that is not particularly mentioned = 30 kHz. Note that, in each drawing of the present disclosure, a slot index corresponding to each CC is appropriately illustrated. For example, slots n to n+9 in Fig. 1 may indicate slot indexes of the CC corresponding to SCS = 30 kHz, respectively.

The SPS configurations 1, 3 and 4 are each activated by different DCI prior to the illustrated slot n and correspond to SPS PDSCHs #1 to #3, respectively. That is, the SPS PDSCHs #1 to # 3 in Fig. 1 correspond to the SPS PDSCHs that are not associated with the activation DCI. Note that the SPS configuration 2 is not activated.

In Fig. 1, it is assumed that a set of possible values of K₁ (which may be simply referred to as a K₁ set) is set to {8, 6, 4, 2}. In the present disclosure, the value included in the K₁ set may correspond to a value set by higher layer signaling (for example, an RRC parameter "dl-DataToUL-ACK").

Furthermore, in Fig. 1, it is assumed that K₁ = K_{1,0} (that is, 8) is designated for the SPS PDSCH #1, K₁ = K_{1,2} (that is, 4) is designated for the SPS PDSCH #2, and K₁ = K_{1,3} (that is, 2) is designated for the SPS PDSCH #3 for the UE.

The HARQ-ACK bits for the SPS PDSCHs #1 to #3 indicated to be transmitted in the same UL slot (slot n+9) constitute one codebook (codebook size = 3). The UE transmits the HARQ-ACK bits of the codebook in the UL slot. Note that the bits in the codebook in Fig. 1 do not indicate an arrangement order. The arrangement order will be described later.

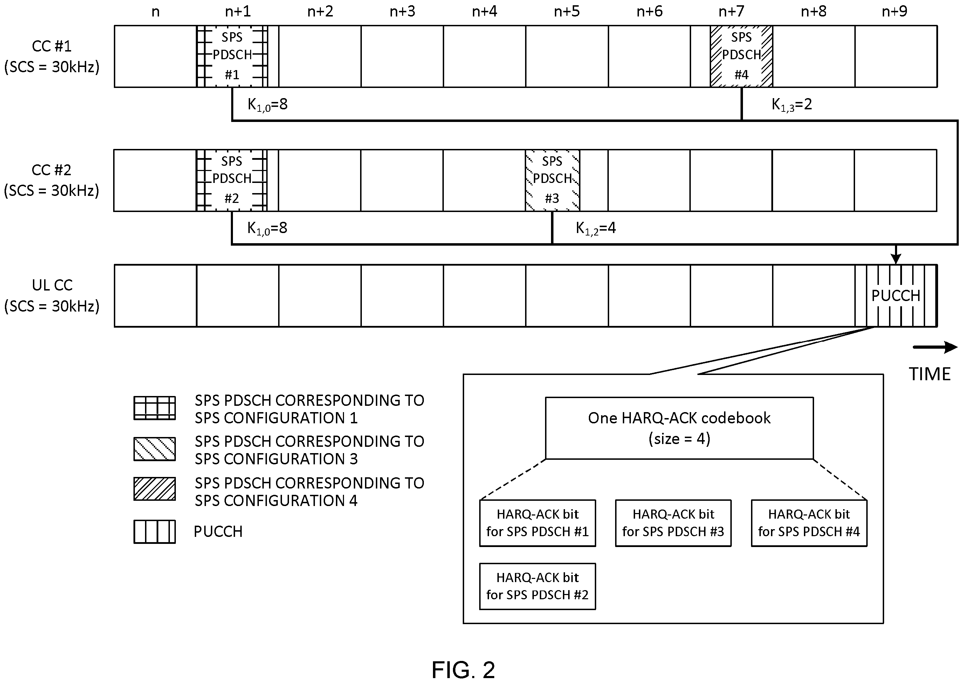

Fig. 2 is a diagram illustrating an example of the UL slot-based HARQ-ACK codebook. In this example, multiple SPS configurations (SPS configurations 1 to 4) configured for two serving cells (CCs #1 and #2) are configured for the UE. The K₁ set is the same as that in Fig. 1.

For CC #1, the SPS configurations 1 and 4 are each activated by different DCI prior to the slot n and correspond to the SPS PDSCHs #1 and #4, respectively. For CC #2, the SPS configurations 1 and 3 are each activated by different DCI prior to the slot n and correspond to the SPS PDSCHs #2 and #3, respectively. Note that the SPS configuration 2 is not activated. Further, the SPS PDSCHs #1 and # 2 corresponding to the same SPS configuration 1 may be activated by the same DCI.

It is assumed that K₁ = K_{1,0} (that is, 8) is designated for the SPS PDSCHs #1 and #2, K₁ = K_{1,2} (that is, 4) is designated for the SPS PDSCH #3, and K₁ = K_{1,3} (that is, 2) is designated for the SPS PDSCH #4.

The HARQ-ACK bits for the SPS PDSCHs #1 to #4 indicated to be transmitted in the same UL slot (slot n+9) constitute one codebook (codebook size = 4). The UE transmits the HARQ-ACK bits of the codebook in the UL slot. Note that the bits in the codebook in Fig. 2 do not indicate an arrangement order.

### [Arrangement Order of HARQ-ACKs for SPS of Dynamic HARQ-ACK Codebook]

In the first embodiment, the arrangement order of the HARQ-ACK bits for the SPS PDSCHs of the HARQ-ACK codebook transmitted in the same slot/subslot/PUCCH may be determined by applying the following rules (1) to (3) in any order:
(1) earlier SPS occasion first (in other words, the earlier HARQ-ACK timing first),
(2) lower CC first (in other words, a carrier having a lower CC index first), and
(3) lower SPS index first.

Note that "earlier" of these rules may be replaced with "later", and "lower" may be replaced with "higher". The SPS index may be replaced with an SPS configuration index or the like.

Furthermore, in a case where the same HARQ-ACK timing is configured for different SPS PDSCHs on the same CC, among the HARQ-ACK bits for the SPS PDSCHs at the HARQ-ACK timing, the HARQ-ACK bit for the SPS PDSCH with the earlier SPS occasion (for example, a lower start symbol index of the SPS occasion) may be arranged first.

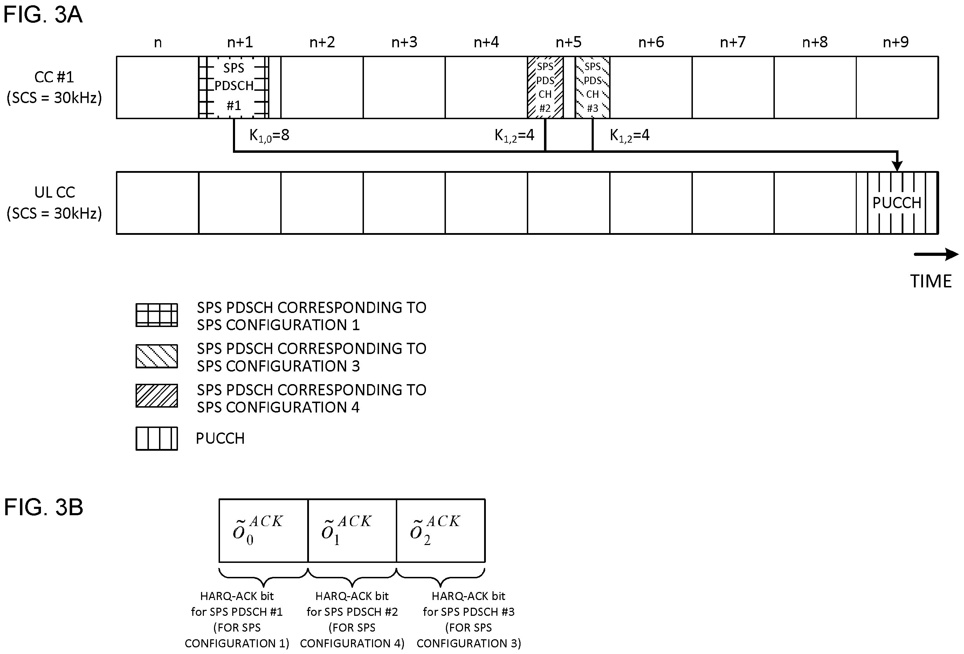

Figs. 3A and 3B are diagrams illustrating an example of an arrangement order of bits of the UL slot-based HARQ-ACK codebook. Fig. 3A is the same as Fig. 1, except that both the SPS PDSCH #3 and the SPS PDSCH #2 are K_{1,2}.

Fig. 3B is a diagram illustrating a content of each bit in the HARQ-ACK codebook corresponding to Fig. 3A. The HARQ-ACK bits in this example are arranged in descending order of the values of the PDSCH-to-HARQ feedback timing in the same cell index ((1) above).

Fig. 3B illustrates a total of three bits, o₀^{ACK} to o₂^{ACK}. Note that, in the present specification, a tilde (-) attached above "o" of oⱼ^{ACK} (j is an integer) is omitted for simplicity, but this can be replaced with a tilde-attached notation as illustrated in the drawings. Note that oⱼ^{ACK} may mean the j-th HARQ-ACK in the codebook.

The UE may place the HARQ-ACK bit (if any) corresponding to normal PDSCH, similar to Rel. 15, at the beginning of the HARQ-ACK codebook in the order of largest K₁ (for example, K₁ = 8) to smallest K₁ (for example, K₁ = 1) .

The HARQ-ACK bits corresponding to the SPS PDSCHs that are not associated with the activation DCI may be arranged in order of earlier (lower) SPS occasion. In addition, in this example, the HARQ-ACK bits for multiple SPS PDSCHs at the same HARQ-ACK timing are arranged in order of lower start symbol index of the SPS occasion.

In Fig. 3B, o₀^{ACK} to o₂^{ACK} are as follows:
o₀^{ACK}: SPS PDSCH #1,
o₁^{ACK}: SPS PDSCH #2, and
o₂^{ACK}: SPS PDSCH #3.

Since the SPS PDSCH #2 starts from the beginning of the slot n+5 and the SPS PDSCH #3 starts from the latter half of the slot n+5, the HARQ-ACK bit for the SPS PDSCH #2 with a lower start symbol index of the SPS occasion is arranged before the HARQ-ACK bit for the SPS PDSCH #3.

As described above, according to the first embodiment, the UE can appropriately determine the codebook size of the dynamic HARQ-ACK codebook for the SPS PDSCH and the arrangement order of the HARQ-ACKs for the respective SPS PDSCHs in the codebook. In a case where a base station understands the rules of the arrangement order, there is no discrepancy in codebook between the UE and the base station, and transmission/reception processing can be appropriately controlled.

### <Second Embodiment>

A second embodiment relates to a codebook size of the semi-static HARQ-ACK codebook for the SPS PDSCH and an arrangement order of HARQ-ACKs for respective SPS PDSCHs in the codebook.

### [Codebook Size of Semi-Static HARQ-ACK Codebook]

The codebook size of the semi-static HARQ-ACK codebook for the SPS PDSCH may be determined based on the configured SPS configuration, the configured or activated CC, and the set of configured HARQ-ACK timing values (K₁ set) .

For example, the codebook size of the semi-static HARQ-ACK codebook may be determined by the number of configured SPS configurations × the number of configured CCs × the number of HARQ-ACK timing values included in the K₁ set.

Note that in determining the HARQ-ACK codebook to transmit on the PUCCH in the UL slot n, the UE may determine a set of M occasions for candidate SPS PDSCH reception for a serving cell c in the following procedure:
(A) determining the HARQ-ACK feedback window based on a set (each K_{1,k} is in a slot unit) of HARQ-ACK timing values configured by the RRC;
(B) ... (B-1) determining, for each HARQ-ACK timing value K_{1,k}, one candidate SPS PDSCH reception occasion per configured SPS configuration, in a case where the same numerology (SCS or µ) is configured for DL and UL;
   ... (B-2) determining, for each HARQ-ACK timing value K_{1,k}, n candidate SPS PDSCH reception occasions per configured SPS configuration, in a case where a numerology (µ_{DL}) for DL is greater than a numerology (µ_{UL}) for UL (for example, u_{DL} = nµ_{UL}, where n is an integer greater than 1); and
   ... (B-3) determining, for each HARQ-ACK timing value K_{1,k} satisfying a given condition, one candidate SPS PDSCH reception occasion per configured SPS configuration, in a case where the numerology (µ_{DL}) for DL is smaller than the numerology (µ_{UL}) for UL (for example, µ_{UL} = nµ_{DL}, where n is an integer greater than 1). Note that the given condition may be, for example, mod(n_{U}-K_{1,k}+1, max(2^{µUL-µDL}, 1)) = 0. Here, n_{U} may mean a slot index of the UL slot n, and mod(X, Y) may mean a remainder (modulo operation) of X divided by Y.

Note that µ_{DL} may be given by a parameter (subcarrierSpacing) related to a subcarrier spacing of configuration information for a downlink BWP (a BWP-downlink information element of the RRC). µ_{UL} may be given by a parameter (subcarrierSpacing) related to a subcarrier spacing of configuration information for an uplink BWP (a BWP-uplink information element of the RRC).

In a case where carrier aggregation is configured (that is, a plurality of serving cells are configured), the UE may repeat the above procedure to determine the set of occasions for candidate SPS PDSCH reception for each configured serving cell.

The UE may determine the HARQ-ACK codebook size and corresponding bits to transmit in the UL slot based on the determined set of occasions for candidate SPS PDSCH reception.

In determining the HARQ-ACK codebook to transmit on the PUCCH in the UL subslot n, the UE may determine the set of occasions for candidate SPS PDSCH reception based on a content obtained by replacing the slot in the above procedure for determining the set of occasions for candidate SPS PDSCH reception in the UL slot n with the subslot.

In a case of supporting both the UL slot-based HARQ-ACK codebook and the UL subslot-based HARQ-ACK codebook, the UE may determine which codebook to use based on higher layer signaling (for example, the RRC parameter or the MAC parameter), physical layer signaling (for example, the DCI), or a combination thereof.

For example, multiple SPS configurations may be classified into two groups, one group may correspond to the UL slot-based HARQ-ACK codebook, and the other group may correspond to the UL subslot-based HARQ-ACK codebook. One SPS configuration may be associated with only one group.

For the UE, information regarding use of the UL slot-based HARQ-ACK codebook or UL subslot-based HARQ-ACK codebook may be explicitly configured or implicitly configured. In the latter case, the UE may determine whether the HARQ-ACK codebook corresponding to the SPS configuration is the UL slot-based HARQ-ACK codebook or the UL subslot-based HARQ-ACK codebook based on an RRC parameter "n1PUCCH-AN" indicating a PUCCH resource of the SPS configuration.

The UE may determine which one of the UL slot-based HARQ-ACK codebook and the UL subslot-based HARQ-ACK codebook to use, as indicated by a field included in the activation DCI or based on at least one of an SPS index, the SPS period, or the like.

Note that, in a case where a specific condition is satisfied, the codebook size of the semi-static HARQ-ACK codebook may be determined without depending on at least one of the number of configured SPS configurations, the number of configured CCs, or the number of HARQ-ACK timing values included in the K₁ set. Since the following operation is an operation in which at most one HARQ-ACK bit for the SPS is generated even in a case where there are multiple SPSs configurations, the operation may be referred to as a fallback operation (equivalent to Rel. 15 NR).

For example, in a case where no SPS configuration is activated over one or more CCs in one cell group, the HARQ-ACK codebook for the SPS PDSCH does not have to be generated. In this case, it may be assumed that the HARQ-ACK codebook size is 0 bits.

Further, in a case where only one SPS configuration is activated in one arbitrary serving cell over one or more CCs in one cell group, one bit may be generated as the HARQ-ACK bit for the SPS PDSCH related to the one SPS configuration. In this case, it may be assumed that the HARQ-ACK codebook size for the SPS PDSCH is 1 bit. In this case, the fallback operation is allowed for any serving cell.

Further, in a case where only one SPS configuration is activated in one specific serving cell (for example, a primary cell, a primary secondary cell, or a special cell) over one or more CCs in one cell group, one bit may be generated as the HARQ-ACK bit for the SPS PDSCH related to the one SPS configuration. In this case, it may be assumed that the HARQ-ACK codebook size for the SPS PDSCH is 1 bit. In this case, the fallback operation is allowed only for the specific serving cell.

Note that, in a case where the specific condition is not satisfied, the codebook size of the semi-static HARQ-ACK codebook may be determined based on the number of configured SPS configurations, the number of configured CCs, and the number of HARQ-ACK timing values included in the K₁ set as described above.

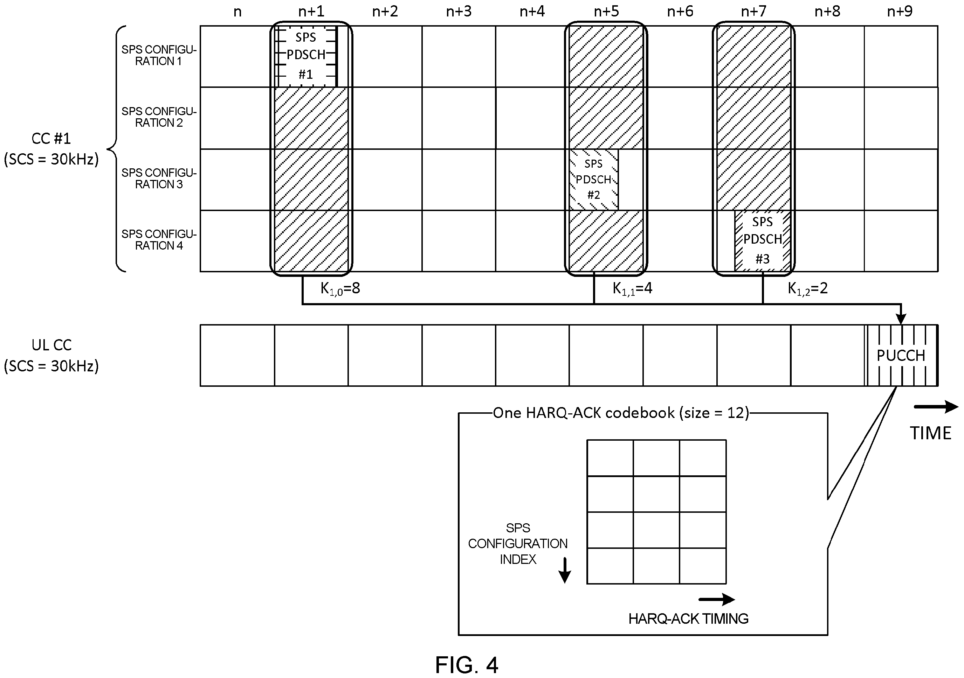

Fig. 4 is a diagram illustrating an example of the semi-static HARQ-ACK codebook in a case where the same numerology is configured for DL and UL. In this example, multiple SPS configurations (SPS configurations 1 to 4) configured for one active serving cell (CC #1) are configured for the UE. In Fig. 4, it is assumed that the K₁ set is set to {8, 4, 2} for the UE.

In Fig. 4, one SPS configuration 1 is already activated with K_{1,0} = 8, one SPS configuration 3 is already activated with K_{1,1} = 4, and one SPS configuration 4 is already activated with K_{1,2} = 2. The SPS PDSCHs #1 to #3 respectively correspond to these activated SPS configurations.

The HARQ-ACK bits for the SPS PDSCHs transmitted in the same UL slot (slot n+9) constitute one codebook. For example, the codebook size may be determined by the number of configured SPS configurations (= 4) × the number of configured CCs (= 1) × the number of HARQ-ACK timing values included in the K₁ set (= 3) = 12. Note that the arrangement order of the bits will be described later.

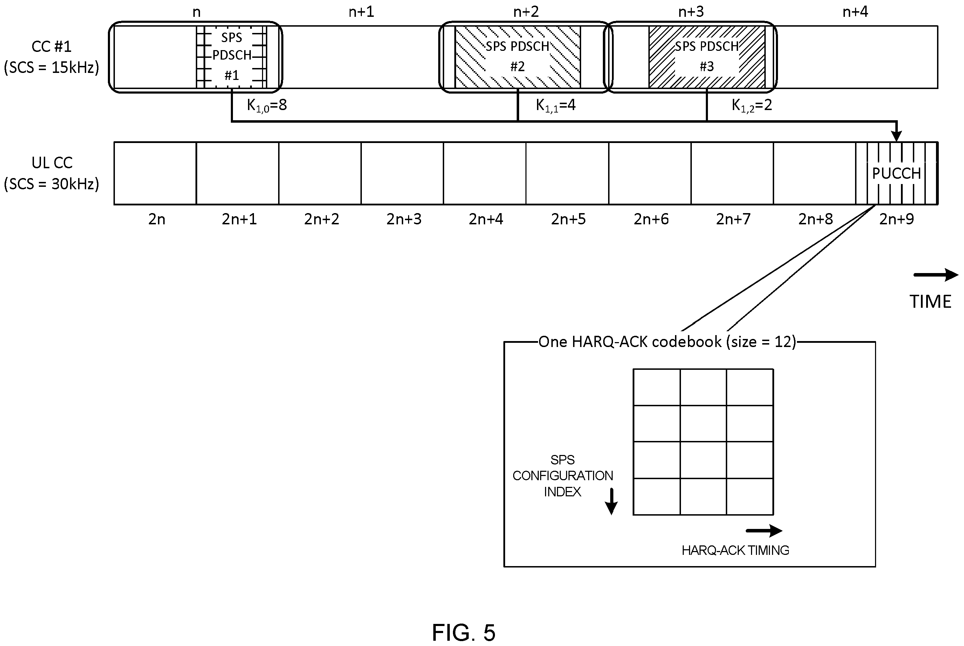

Fig. 5 is a diagram illustrating an example of the semi-static HARQ-ACK codebook in a case where the numerology for DL is smaller than the numerology for UL. Multiple SPS configurations (SPS configurations 1 to 4) configured for one serving cell (CC #1) are configured for the UE. In Fig. 5, it is assumed that the K₁ set is set to {8, 4, 2, 1} for the UE.

In this example, µ_{UL} = 2µ_{DL}. In Fig. 5, one SPS configuration 1 is already activated with K_{1,0} = 8, one SPS configuration 3 is already activated with K_{1,1} = 4, and one SPS configuration 4 is already activated with K_{1,2} = 2. The SPS PDSCHs #1 to #3 respectively correspond to these activated SPS configurations.

The HARQ-ACK bits for the SPS PDSCHs transmitted in the same UL slot (slot n+9) constitute one codebook. The codebook size may be obtained as follows: the number of configured SPS configurations (= 4) × the number of configured CCs (= 1) × the number of HARQ-ACK timing values included in the K₁ set that satisfies the condition (B-3) described above (= 3 (in Fig. 5, since 2^{µUL-µDL} = 2, {8, 4, 2} satisfies the condition)) = 12. Note that the arrangement order of the bits will be described later.

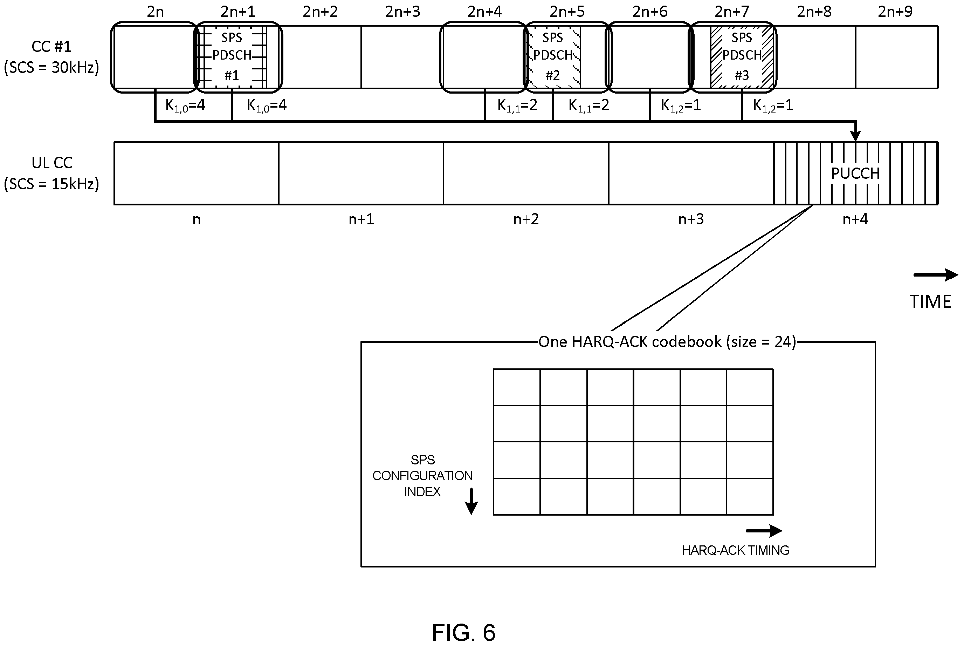

Fig. 6 is a diagram illustrating an example of the semi-static HARQ-ACK codebook in a case where the numerology for DL is greater than the numerology for UL. Multiple SPS configurations (SPS configurations 1 to 4) configured for one serving cell (CC #1) are configured for the UE. In Fig. 6, it is assumed that the K₁ set is set to {4, 2, 1} for the UE.

In this example, µ_{DL} = 2µ_{UL}. In Fig. 6, one SPS configuration 1 is already activated with K_{1,0} = 4, one SPS configuration 3 is already activated with K_{1,1} = 2, and one SPS configuration 4 is already activated with K_{1,2} = 1. The SPS PDSCHs #1 to #3 respectively correspond to these activated SPS configurations.

The HARQ-ACK bits for the SPS PDSCHs transmitted in the same UL slot (slot n+9) constitute one codebook. The codebook size may be determined by the number of configured SPS configurations (= 4) × the number of configured CCs (= 1) × the number of HARQ-ACK timing values included in the K₁ set (= 3) × 2 (from µ_{DL} = 2µ_{UL}) = 24. Note that the arrangement order of the bits will be described later.

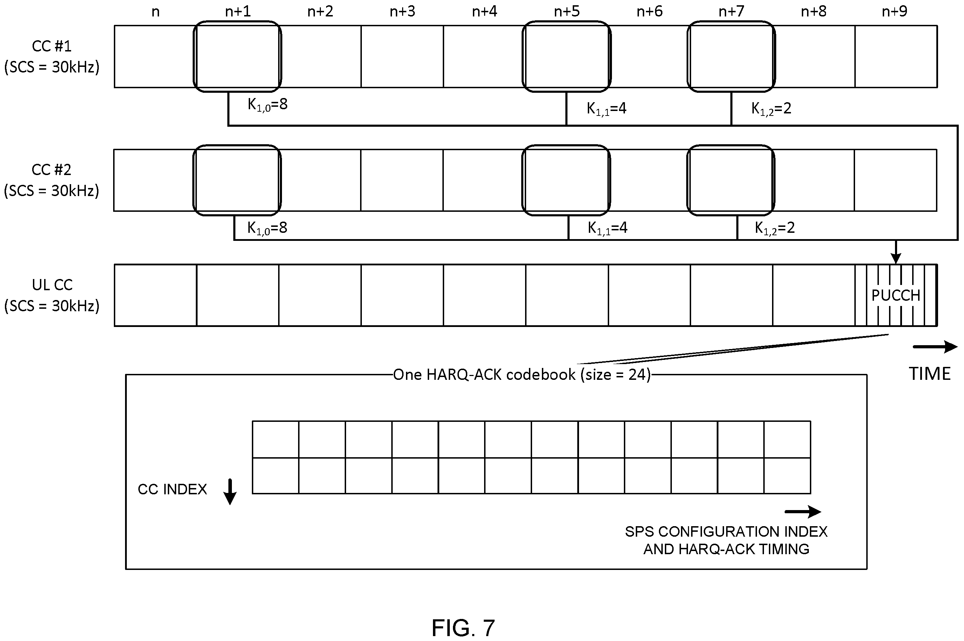

Fig. 7 is a diagram illustrating an example of the semi-static HARQ-ACK codebook in a case where the same numerology is configured for DL and UL. In this example, multiple SPS configurations (SPS configurations 1 to 4) configured for two active serving cells (CCs #1 and #2) are configured for the UE. In Fig. 7, it is assumed that the K₁ set is set to {8, 4, 2} for the UE.

The HARQ-ACK bits for the SPS PDSCHs transmitted in the same UL slot (slot n+9) constitute one codebook. For example, the codebook size may be determined by the number of configured SPS configurations (= 4) × the number of configured CCs (= 2) × the number of HARQ-ACK timing values included in the K₁ set (= 3) = 24.

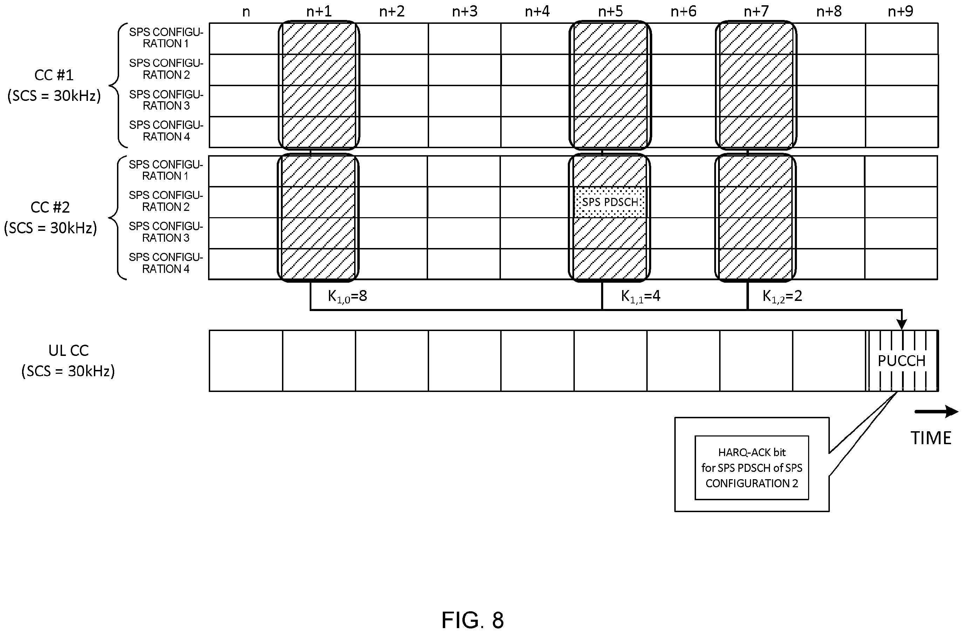

Fig. 8 is a diagram illustrating an example of the HARQ-ACK bit for the SPS PDSCH in a case where only one SPS configuration is activated in one arbitrary serving cell over one or more CCs in one cell group.

In this example, multiple SPS configurations (SPS configurations 1 to 4) configured for two serving cells (CCs #1 and #2) are configured for the UE. In Fig. 8, it is assumed that the K₁ set is set to {8, 4, 2} for the UE.

In Fig. 8, for the UE, only the SPS configuration 2 is activated with K_{1,1} = 4 for CC #2, and the other SPS configurations are not activated. In this case, the HARQ-ACK bit for the SPS PDSCH transmitted in the UL slot (slot n+9) may be one HARQ-ACK bit for the SPS PDSCH of the SPS configuration 2, instead of the number of configured SPS configurations (= 4) × the number of configured CCs (= 2) × the number of HARQ-ACK timing values included in the K₁ set (= 3) = 24 bits.

### [Arrangement Order of HARQ-ACKs for SPS of Semi-Static HARQ-ACK Codebook]

According to the invention, the arrangement order of the HARQ-ACK bits for the SPS PDSCHs of the HARQ-ACK codebook transmitted in the same slot/subslot/PUCCH is determined by applying the following rules (1) to (3)
(1) earlier SPS occasion first (in other words, the earlier HARQ-ACK timing first),
(2) lower SPS index first and
(3) lower CC index first (in other words, a carrier having a lower CC index first).

Furthermore, in a case where the same HARQ-ACK timing is configured for different SPS PDSCHs on the same CC, among the HARQ-ACK bits for the SPS PDSCHs at the HARQ-ACK timing, the HARQ-ACK bit for the SPS PDSCH with the earlier SPS occasion (for example, a lower start symbol index of the SPS occasion) is arranged first.

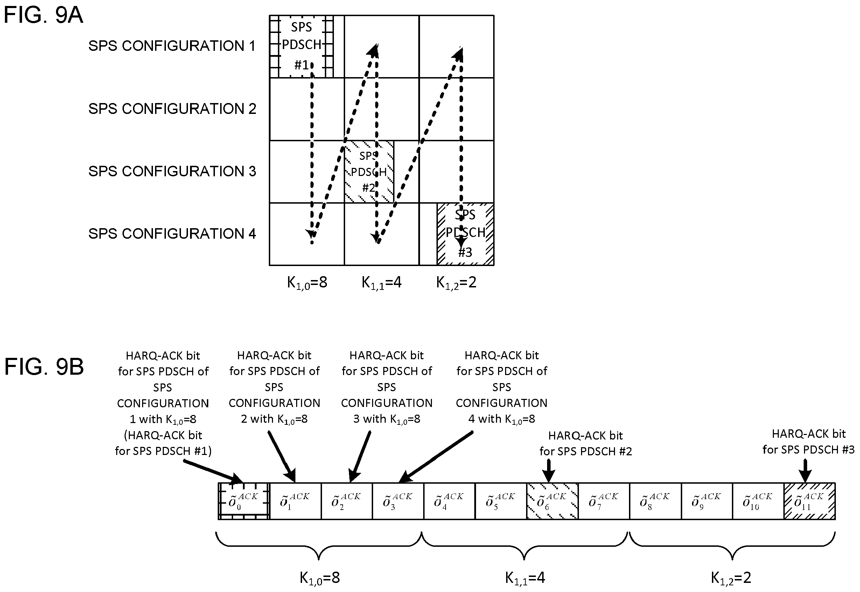

Figs. 9A and 9B are diagrams illustrating an example of an arrangement order in the semi-static HARQ-ACK codebook. This example corresponds to the 12-bit codebook in Fig. 4.

Fig. 9A is a diagram illustrating an example of the arrangement order of the HARQ-ACK bits for the SPS PDSCHs for the CC, the SPS configuration index, and the HARQ-ACK timing value illustrated in Fig. 4 with dotted arrows. In Fig. 9A, the HARQ-ACK bits for the SPS PDSCH occasions without the associated DCI are first arranged in ascending order of the SPS configuration index and then arranged in descending order of the HARQ-ACK timing value for the SPS PDSCH.

Fig. 9B is a diagram illustrating a content of each bit in the HARQ-ACK codebook corresponding to Fig. 9A. In Fig. 9B, o₀^{ACK} to o₁₁^{ACK} correspond to the following:
o₄ₖ₊ₛ₋₁^{ACK}: an SPS PDSCH of an SPS configuration s (s ≥ 1) activated with K_{1,k}.

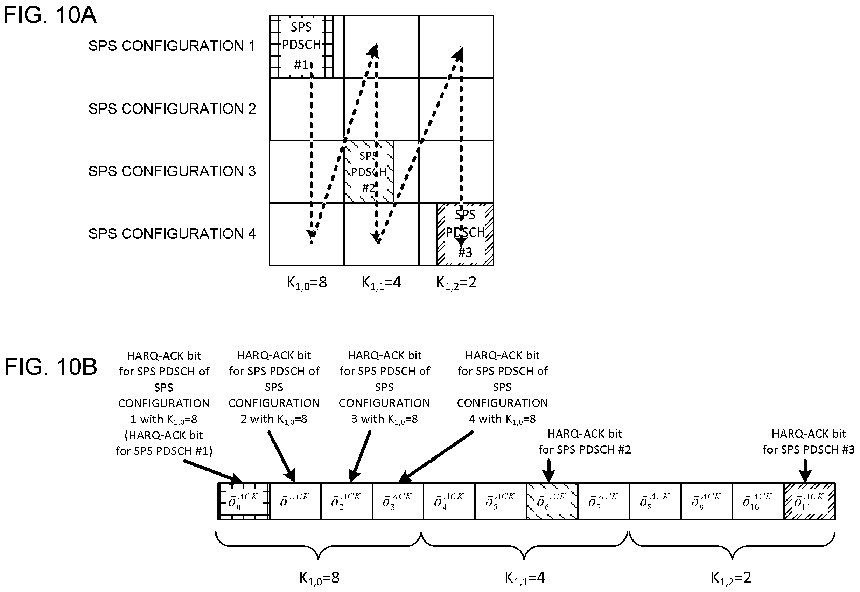

Figs. 10A and 10B are diagrams illustrating an example of an arrangement order in the semi-static HARQ-ACK codebook. This example corresponds to the 12-bit codebook in Fig. 5.

Fig. 10A is a diagram illustrating an example of the arrangement order of the HARQ-ACK bits for the SPS PDSCHs for the CC, the SPS configuration index, and the HARQ-ACK timing value illustrated in Fig. 5 with dotted arrows. In Fig. 10A, the HARQ-ACK bits for the SPS PDSCH occasions without the associated DCI are first arranged in ascending order of the SPS configuration index and then arranged in descending order of the HARQ-ACK timing value for the SPS PDSCH.

Fig. 10B is a diagram illustrating a content of each bit in the HARQ-ACK codebook corresponding to Fig. 10A. In Fig. 10B, o₀^{ACK} to o₁₁^{ACK} correspond to the following:
o₄ₖ₊ₛ₋₁^{ACK}: an SPS PDSCH of an SPS configuration s (s ≥ 1) activated with K_{1,k}.

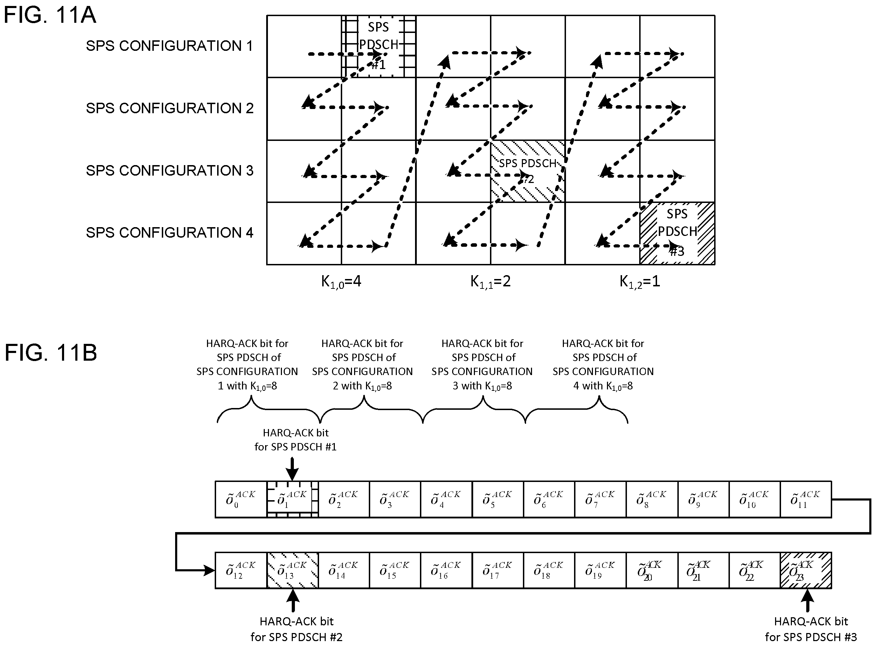

Figs. 11A and 11B are diagrams illustrating an example of an arrangement order in the semi-static HARQ-ACK codebook. This example corresponds to the 24-bit codebook in Fig. 6.

Fig. 11A is a diagram illustrating an example of the arrangement order of the HARQ-ACK bits for the SPS PDSCHs for the CC, the SPS configuration index, and the HARQ-ACK timing value illustrated in Fig. 6 with dotted arrows. In Fig. 11A, the HARQ-ACK bits for the SPS PDSCH occasions without the associated DCI are first arranged in ascending order of the SPS configuration index and then arranged in descending order of the HARQ-ACK timing value for the SPS PDSCH. Note that it is assumed that the HARQ-ACK bits for multiple SPS PDSCHs on the same CC and at the same HARQ-ACK timing are arranged in order of earlier SPS occasion.

Fig. 11B is a diagram illustrating a content of each bit in the HARQ-ACK codebook corresponding to Fig. 11A. In Fig. 11B, o₀^{ACK} to o₂₃^{ACK} correspond to the following:
o₈ₖ^{ACK} and o₈ₖ₊₁^{ACK}: an SPS PDSCH of the SPS configuration 1 activated with K_{1,k},
o₈ₖ₊₂^{ACK} and o₈ₖ₊₃^{ACK}: an SPS PDSCH of the SPS configuration 2 activated with K_{1,k},
o₈ₖ₊₄^{ACK} and o₈ₖ₊₅^{ACK}: an SPS PDSCH of the SPS configuration 3 activated with K_{1,k}, and
o₈ₖ₊₆^{ACK} and o₈ₖ₊₇^{ACK}: an SPS PDSCH of the SPS configuration 4 activated with K_{1,k}.

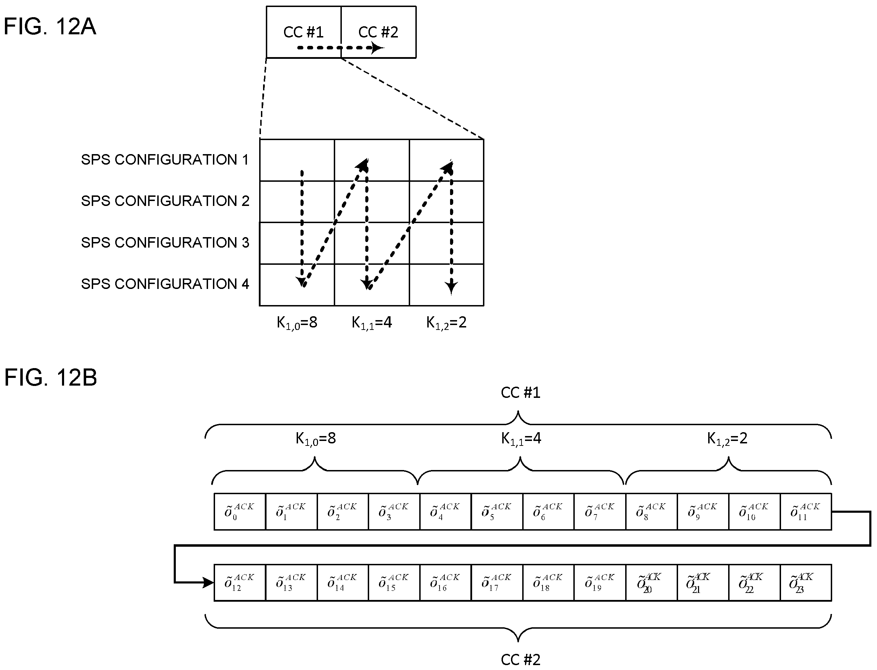

Figs. 12A and 12B are diagrams illustrating an example of an arrangement order in the semi-static HARQ-ACK codebook. This example corresponds to the 24-bit codebook in Fig. 7.

Fig. 12A is a diagram illustrating an example of the arrangement order of the HARQ-ACK bits for the SPS PDSCHs for the CC, the SPS configuration index, and the HARQ-ACK timing value illustrated in Fig. 7 with dotted arrows. In Fig. 12A, the HARQ-ACK bits for the SPS PDSCH occasions without the associated DCI are first arranged in ascending order of the SPS configuration index, then arranged in descending order of the HARQ-ACK timing value for the SPS PDSCH, and then arranged in ascending order of the CC index.

Fig. 12B is a diagram illustrating a content of each bit in the HARQ-ACK codebook corresponding to Fig. 12A. In Fig. 12B, o₀^{ACK} to o₂₃^{ACK} correspond to the following:
o₄ₖ₊ₓ^{ACK} (x = 0 to 11): SPS PDSCHs of the SPS configurations 1 to 4 for CC #1 activated with K_{1,k}, and
o₁₂₊₄ₖ₊ₓ^{ACK} (x = 0 to 11): SPS PDSCHs of the SPS configurations 1 to 4 for CC #2 activated with K_{1,k}.

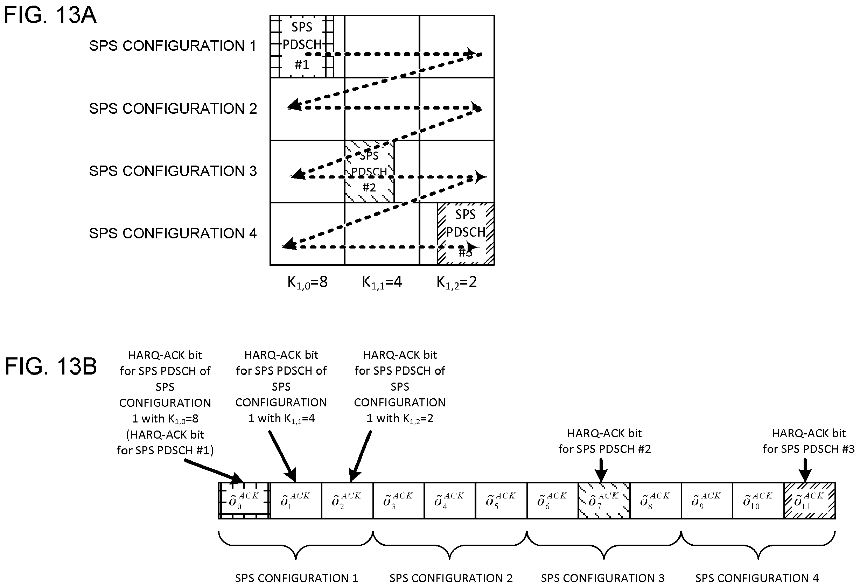

Figs. 13A and 13B are diagrams illustrating an example of an arrangement order in the semi-static HARQ-ACK codebook. This example corresponds to the 12-bit codebook in Fig. 4.

Fig. 13A is a diagram illustrating an example of the arrangement order of the HARQ-ACK bits for the SPS PDSCHs for the CC, the SPS configuration index, and the HARQ-ACK timing value illustrated in Fig. 4 with dotted arrows. In Fig. 13A, the HARQ-ACK bits for the SPS PDSCH occasions without the associated DCI are first arranged in descending order of the HARQ-ACK timing value for the SPS PDSCH and then arranged in ascending order of the SPS configuration index.

Fig. 13B is a diagram illustrating a content of each bit in the HARQ-ACK codebook corresponding to Fig. 13A. In Fig. 13B, o₀^{ACK} to o₁₁^{ACK} correspond to the following:
o₃₍ₛ₋₁₎₊ₖ^{ACK}: an SPS PDSCH of the SPS configuration s (s ≥ 1) activated with K_{1,k}.

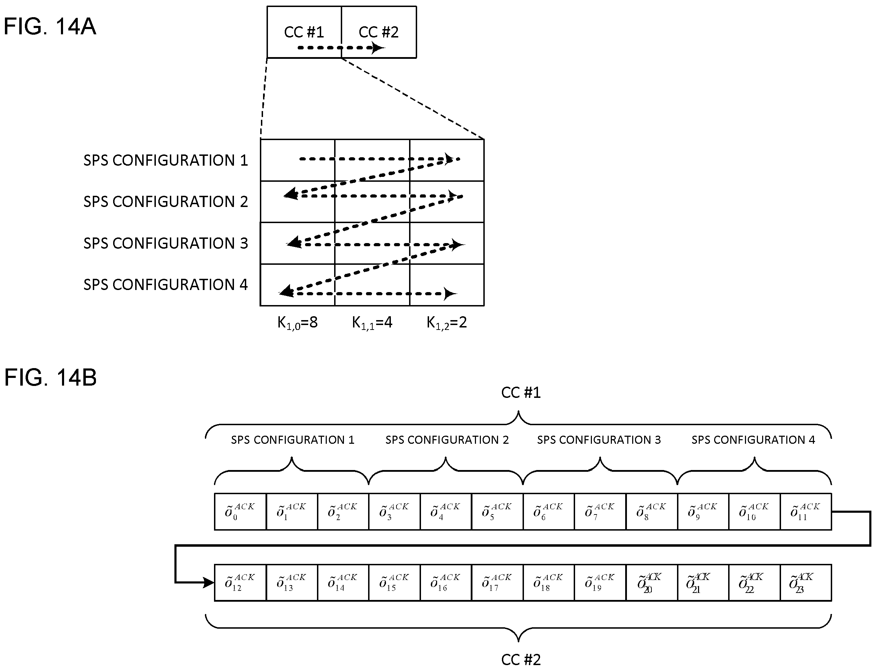

Figs. 14A and 14B are diagrams illustrating an example of an arrangement order in the semi-static HARQ-ACK codebook. This example corresponds to the 24-bit codebook in Fig. 7.

Fig. 14A is a diagram illustrating an example of the arrangement order of the HARQ-ACK bits for the SPS PDSCHs for the CC, the SPS configuration index, and the HARQ-ACK timing value illustrated in Fig. 7 with dotted arrows. In Fig. 14A, the HARQ-ACK bits for the SPS PDSCH occasions without the associated DCI are first arranged in descending order of the HARQ-ACK timing value for the SPS PDSCH, then arranged in ascending order of the SPS configuration index, and then arranged in ascending order of the CC index.

Fig. 14B is a diagram illustrating a content of each bit in the HARQ-ACK codebook corresponding to Fig. 14A. In Fig. 14B, o₀^{ACK} to o₂₃^{ACK} correspond to the following:
o₃₍ₛ₋₁₎₊ₖ^{ACK}: an SPS PDSCH of the SPS configuration s (s ≥ 1) for CC #1 activated with K_{1,k}, and
O₁₂₊₃₍ₛ₋₁₎₊ₖ^{ACK}: an SPS PDSCH of the SPS configuration s (s ≥ 1) for CC #2 activated with K_{1,k}.

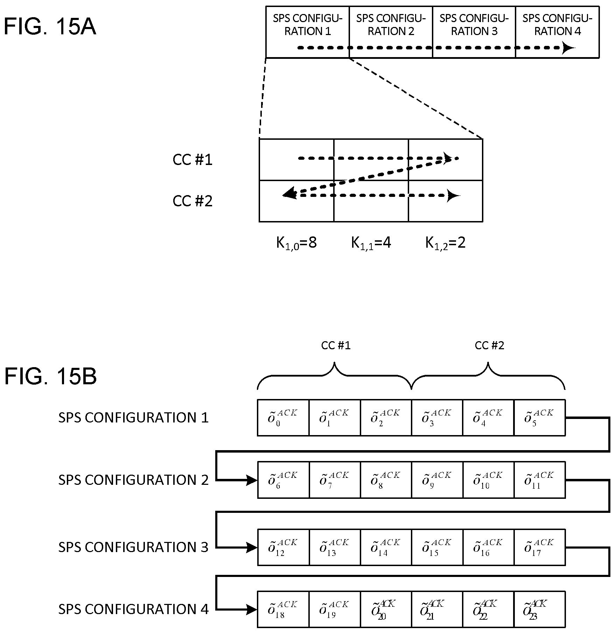

Figs. 15A and 15B are diagrams illustrating an example of an arrangement order in the semi-static HARQ-ACK codebook. This example corresponds to the 24-bit codebook in Fig. 7.

Fig. 15A is a diagram illustrating an example of the arrangement order of the HARQ-ACK bits for the SPS PDSCHs for the CC, the SPS configuration index, and the HARQ-ACK timing value illustrated in Fig. 7 with dotted arrows. In Fig. 15A, the HARQ-ACK bits for the SPS PDSCH occasions without the associated DCI are first arranged in descending order of the HARQ-ACK timing value for the SPS PDSCH, then arranged in ascending order of the CC index, and then arranged in ascending order of the SPS configuration index.

Fig. 15B is a diagram illustrating a content of each bit in the HARQ-ACK codebook corresponding to Fig. 15A. In Fig. 15B, o₀^{ACK} to o₂₃^{ACK} correspond to the following:
O₆₍ₛ₋₁₎₊₃₍ₜ₋₁₎₊ₖ^{ACK}: an SPS PDSCH of the SPS configuration s (s ≥ 1) for CC #t activated with K_{1,k}.

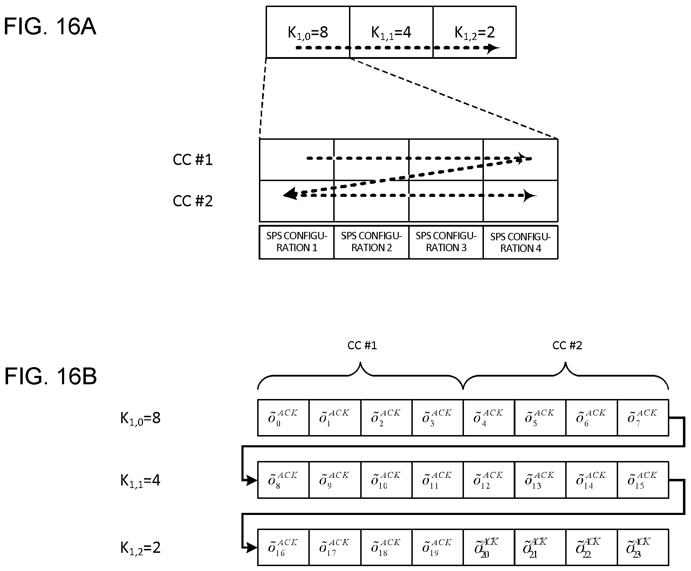

Figs. 16A and 16B are diagrams illustrating an example of an arrangement order in the semi-static HARQ-ACK codebook. This example corresponds to the 24-bit codebook in Fig. 7.

Fig. 16A is a diagram illustrating an example of the arrangement order of the HARQ-ACK bits for the SPS PDSCHs for the CC, the SPS configuration index, and the HARQ-ACK timing value illustrated in Fig. 7 with dotted arrows. In Fig. 16A, the HARQ-ACK bits for the SPS PDSCH occasions without the associated DCI are first arranged in ascending order of the SPS configuration index, then arranged in ascending order of the CC index, and then arranged in descending order of the HARQ-ACK timing value for the SPS PDSCH.

Fig. 16B is a diagram illustrating a content of each bit in the HARQ-ACK codebook corresponding to Fig. 16A. In Fig. 16B, o₀^{ACK} to o₂₃^{ACK} correspond to the following:
O₈ₖ₊₄₍ₜ₋₁₎₊₍ₛ₋₁₎^{ACK}: an SPS PDSCH of the SPS configuration s (s ≥ 1) for CC #t activated with K_{1,k}.

As described above, according to the second embodiment, the UE can appropriately determine the codebook size of the semi-static HARQ-ACK codebook for the SPS PDSCH and the arrangement order of the HARQ-ACKs for the respective SPS PDSCHs in the codebook. In a case where a base station understands the rules of the arrangement order, there is no discrepancy in codebook between the UE and the base station, and transmission/reception processing can be appropriately controlled.

### <Others>

The UE may assume any of the following for whether the dynamic codebook in the first embodiment or the dynamic codebook in the second embodiment is used:
- Only one of them is supported. Which one is used is defined in advance by the specification.
- Both of them can be supported. Information regarding one or more codebooks to be used may be configured in the UE by higher layer signaling or the like.

Note that the UE may also assume that neither of them is supported. In this case, the UE may assume that the HARQ-ACK bits for multiple SPS PDSCHs belonging to different SPS configurations are not transmitted in the same UL slot, in the same UL subslot or in the same PUCCH resource.

Note that, in each of the above-described embodiments, an example in which the HARQ-ACK bits corresponding to the respective SPS PDSCHs are consecutive (adjacent) bits has been described, but the present invention is not limited thereto. For example, in the HARQ-ACK codebook transmitted by using the PUCCH, a HARQ-ACK bit (for example, the HARQ-ACK for the SPS PDSCH associated with the activation DCI, the HARQ-ACK bit corresponding to the SPS release, the HARQ-ACK bit corresponding to the dynamic PDSCH, or the like) may be disposed between a HARQ-ACK bit corresponding to one SPS PDSCH and a HARQ-ACK bit corresponding to another SPS PDSCH.

That is, the arrangement order of the HARQ-ACK bits described in each embodiment may be the arrangement order when only the HARQ-ACK bits corresponding to the respective SPS PDSCHs are considered.

Furthermore, in each of the above-described embodiments, an example in which slot boundaries (or frame boundaries) of a plurality of CCs coincide with each other has been described. However, a person skilled in the art can understand that the contents of the present disclosure can be applied even in a case where the slot boundaries do not coincide with each other.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

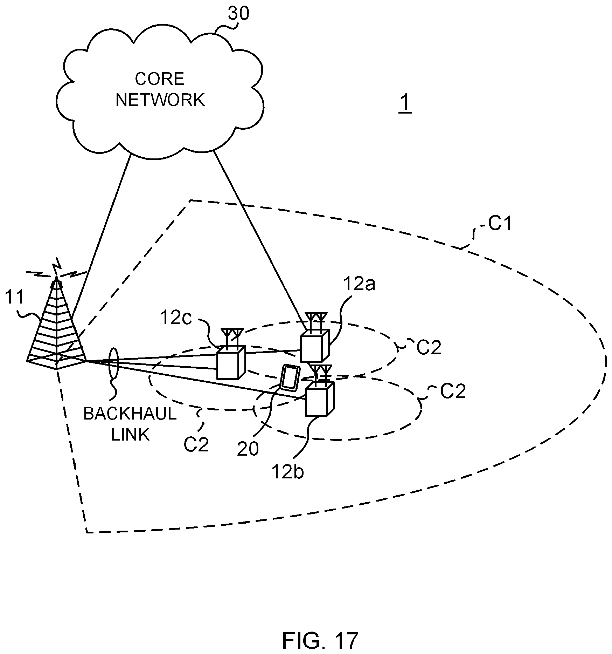

Fig. 17 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10", unless these are distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range (frequency range 1 (FR1)) or a second frequency range (frequency range 2 (FR2)). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of the FR1 and FR2 are not limited thereto, and, for example, FR1 may correspond to a frequency range higher than FR2.

Further, the user terminal 20 may perform communication on each CC using at least one of time division duplex (TDD) or frequency division duplex (FDD).

The plurality of base stations 10 may be connected to each other in a wired manner (for example, an optical fiber, an X2 interface, or the like in compliance with common public radio interface (CPRI)) or in a wireless manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (for example, another single carrier transmission method or another multi-carrier transmission method) may be used as the UL and DL radio access methods.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. User data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that, the DCI for scheduling the PDSCH may be referred to as DL assignment, DL DCI, or the like, and the DCI for scheduling the PUSCH may be referred to as UL grant, UL DCI, or the like. Note that, the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a given search space based on search space configuration.

One search space may correspond to a PDCCH candidate corresponding to one or more aggregation levels. One or more search spaces may be referred to as a search space set. Note that the terms "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that, in the present disclosure, downlink, uplink, and the like may be expressed without "link". Furthermore, various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that the DMRS may be referred to as a UE-specific reference signal.

### (Base Station)

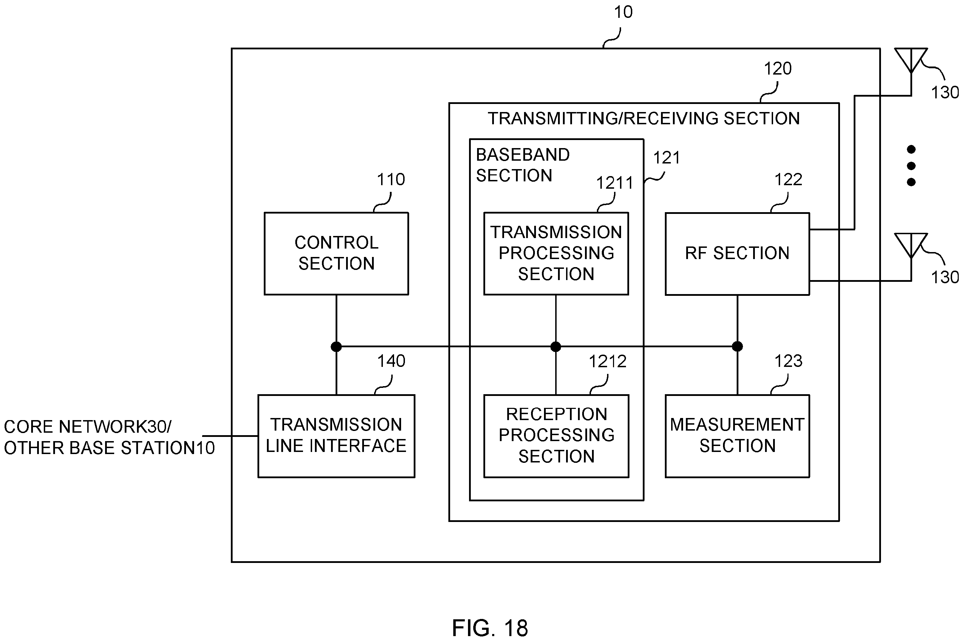

Fig. 18 is a diagram illustrating an example of a configuration of the base station according to one embodiment. The base station 10 includes a control section 110, a transmitting/receiving section 120, a transmission/reception antenna 130, and a transmission line interface 140. Note that one or more control sections 110, one or more transmitting/receiving sections 120, one or more transmission/reception antennas 130, and one or more transmission line interfaces 140 may be provided.

Note that, although this example mainly describes functional blocks of a characteristic part of the present embodiment, it may be assumed that the base station 10 includes other functional blocks that are necessary for radio communication as well. A part of processing performed by each section described below may be omitted.

The control section 110 controls the entire base station 10. The control section 110 can include a controller, a control circuit, and the like, which are described based on common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, state management of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 120 may be configured as an integrated transmitting/receiving section, or may include a transmitting section and a receiving section. The transmitting section may include the transmission processing section 1211 and the RF section 122. The receiving section may include the reception processing section 1212, the RF section 122, and the measurement section 123.

The transmission/reception antenna 130 can include an antenna, which is described based on common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency range, filtering processing, amplification, and the like on the baseband signal, and may transmit a signal in the radio frequency range via the transmission/reception antenna 130.

Meanwhile, the transmitting/receiving section 120 (RF section 122) may perform amplification, filtering processing, demodulation to a baseband signal, and the like on the signal in the radio frequency range received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may perform transmission/reception of a signal (backhaul signaling) to/from an apparatus included in the core network 30, another base station 10, or the like, and may perform acquisition, transmission, or the like of user data (user plane data), control plane data, and the like for the user terminal 20.

Note that, the transmitting section and the receiving section of the base station 10 in the present disclosure may include at least one of the transmitting/receiving section 120, the transmission/reception antenna 130, or the transmission line interface 140.

Note that the transmitting/receiving section 120 may receive the HARQ-ACK information bit corresponding to the dynamic or semi-static HARQ-ACK codebook including the HARQ-ACK corresponding to the SPS PDSCH by using one uplink control channel (PUCCH) or PUSCH.

### (User Terminal)

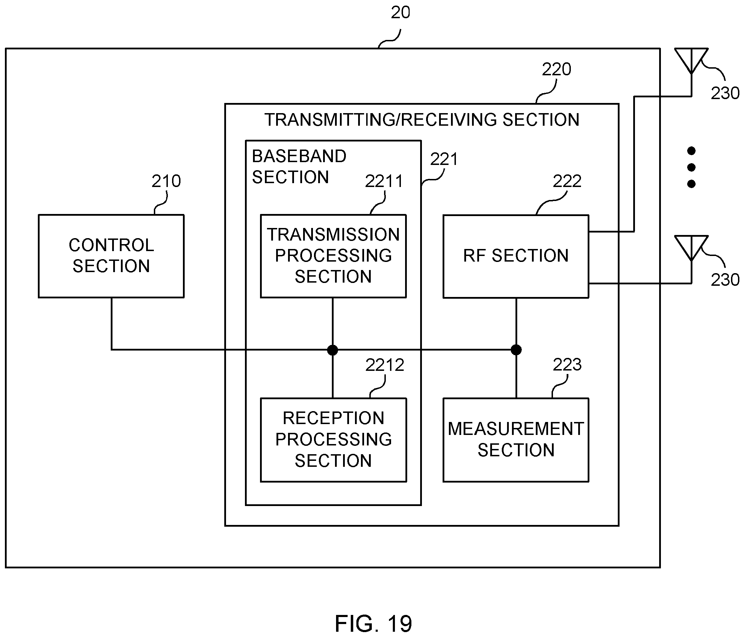

Fig. 19 is a diagram illustrating an example of a configuration of the user terminal according to one embodiment. The user terminal 20 includes a control section 210, a transmitting/receiving section 220, and a transmission/reception antenna 230. Note that one or more control sections 210, one or more transmitting/receiving sections 220, and one or more transmission/reception antennas 230 may be provided.

Note that, although this example mainly describes functional blocks of a characteristic part of the present embodiment, it may be assumed that the user terminal 20 includes other functional blocks that are necessary for radio communication as well. A part of processing performed by each section described below may be omitted.

The control section 210 controls the entire user terminal 20. The control section 210 can include a controller, a control circuit, and the like, which are described based on common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may forward the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like, which are described based on common recognition in the technical field related to the present disclosure.

The transmitting/receiving section 220 may be configured as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna, which is described based on common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, or the like acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. When transform precoding is enabled for a channel (for example, PUSCH), the transmitting/receiving section 220 (transmission processing section 2211) may perform DFT processing as the above-described transmission processing in order to transmit the channel by using a DFT-s-OFDM waveform, and if not, the DFT processing does not have to be performed as the transmission processing.

The transmitting/receiving section 220 (RF section 222) may perform modulation to a radio frequency range, filtering processing, amplification, and the like on the baseband signal, and may transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 or the transmission/reception antenna 230.

Note that the control section 210 may determine the size of the dynamic or semi-static HARQ-ACK codebook including the HARQ-ACK corresponding to the downlink shared channel (PDSCH) of the SPS based on the number of configured SPS configurations, the number of configured or activated cells (or CCs), and the number of HARQ-ACK timing values included in the set of configured HARQ-ACK timing values (K₁ set).

The HARQ-ACK codebook may be a HARQ-ACK codebook including only the HARQ-ACK for the SPS PDSCH without the associated DCI (for example, the activation DCI), a HARQ-ACK codebook including the HARQ-ACK for the SPS PDSCH with the associated DCI, or a HARQ-ACK codebook including both of these HARQ-ACKs.

The transmitting/receiving section 220 may transmit the HARQ-ACK information bit corresponding to the HARQ-ACK codebook by using a resource of the uplink control channel (PUCCH) or the PUSCH.

For example, the transmitting/receiving section 220 may transmit the HARQ-ACK information bit corresponding to the HARQ-ACK codebook by using the PUCCH resource based on the SPS (for example, the SPS configuration of the SPS) corresponding to the HARQ-ACK at a specific position of the HARQ-ACK codebook. The specific position may be at least one of the last position, the beginning position, or the n-th position (n is an integer).

The control section 210 may determine the codebook size of the semi-static HARQ-ACK codebook without depending on at least one of the number of SPS configurations, the number of cells, or the number of HARQ-ACK timing values included in the set, in a case where the specific condition is satisfied.

The control section 210 may determine, in a case where a numerology for a given cell corresponding to the semi-static HARQ-ACK codebook and a numerology for a cell where the uplink control channel is transmitted are the same as each other, a set of candidate SPS PDSCH reception occasions of the given cell in such a manner as to include one candidate SPS PDSCH reception occasion per SPS configuration for each HARQ-ACK timing value included in the set.

The control section 210 may determine, in a case where the numerology for a given cell corresponding to the semi-static HARQ-ACK codebook is greater than the numerology for a cell where the uplink control channel is transmitted, a set of candidate SPS PDSCH reception occasions of the given cell in such a manner as to include a determined number of candidate SPS PDSCH reception occasions per SPS configuration for each HARQ-ACK timing value included in the set, the determined number being determined based on the numerologies.

The control section 210 may determine, in a case where the numerology for a given cell corresponding to the semi-static HARQ-ACK codebook is smaller than the numerology for a cell where the uplink control channel is transmitted, a set of candidate SPS PDSCH reception occasions of the given cell in such a manner as to include one candidate SPS PDSCH reception occasion per SPS configuration for each HARQ-ACK timing value included in the set and satisfying a given condition.

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a wireless manner, or the like, for example) and using these apparatuses. The functional block may be implemented by combining the one device or the plurality of devices with software.

Here, the functions include determination, judging, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and the like, but are not limited to these. For example, a functional block (component) that has a transmission function may be referred to as a transmitting section (transmitting unit), a transmitter, and the like. In any case, as described above, the implementation method is not particularly limited.

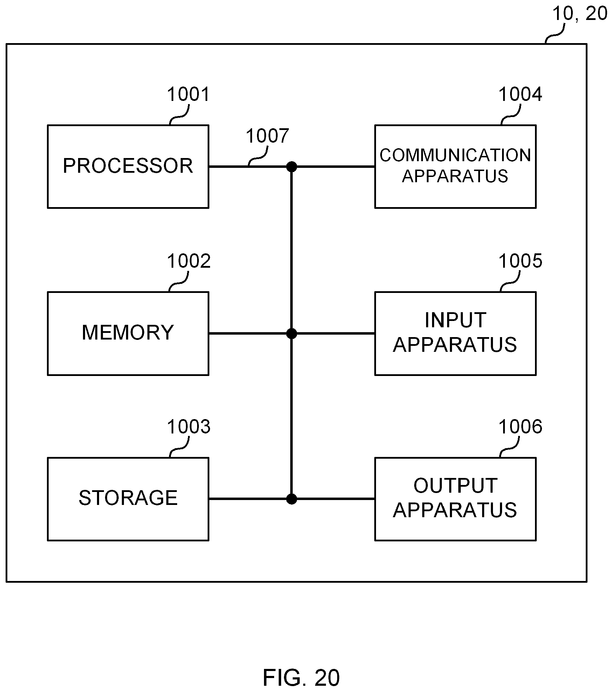

For example, the base station, the user terminal, or the like according to one embodiment of the present disclosure may function as a computer that executes the processing of the radio communication method in the present disclosure. Fig. 20 is a diagram illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

In the present disclosure, the terms such as an apparatus, a circuit, a device, a section, or a unit can be replaced with each other. The hardware configuration of the base station 10 and the user terminal 20 may include one or more of each of the apparatuses illustrated in the drawings, or does not have to include some apparatuses.

For example, although only one processor 1001 is illustrated, a plurality of processors may be provided. Further, the processing may be executed by one processor, or the processing may be executed by two or more processors simultaneously or sequentially, or by using other methods. The processor 1001 may be implemented by one or more chips.

Each of functions of the base station 10 and the user terminal 20 is, for example, implemented by causing given software (program) to be read on hardware such as the processor 1001 or the memory 1002 to thereby cause the processor 1001 to perform operation, control communication via the communication apparatus 1004, and control at least one of reading or writing of data from or in the memory 1002 and the storage 1003.

The processor 1001 may control the entire computer by operating, for example, an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program code), software modules, data, and so on from at least one of the storage 1003 or the communication apparatus 1004 into the memory 1002, and executes various types of processing according to these. As the program, a program that causes a computer to execute at least a part of the operation described in the above-described embodiment is used. For example, the control section 110 (210) may be implemented by a control program that is stored in the memory 1002 and that operates on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for performing inter-computer communication via at least one of a wired network or a wireless network, and for example, is referred to as "network device", "network controller", "network card", "communication module", and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented in a physically or logically separated manner by the transmitting section 120a (220a) and the receiving section 120b (220b).

The input apparatus 1005 is an input device that receives input from the outside (for example, a keyboard, a mouse, a microphone, a switch, a button, a sensor, or the like). The output apparatus 1006 is an output device that performs output to the outside (for example, a display, a speaker, a light emitting diode (LED) lamp, or the like). Note that the input apparatus 1005 and the output apparatus 1006 may be integrated with each other (for example, a touch panel).

Further, these apparatuses such as the processor 1001 and the memory 1002 are connected to each other by the bus 1007 to communicate information. The bus 1007 may be configured by using a single bus, or may be configured by using a different bus for each apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented by at least one of these pieces of hardware.

### (Modification)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a given signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, and the like.

The slot may include one or more symbols in the time domain (orthogonal frequency division multiplexing (OFDM) symbols, single carrier frequency division multiple access (SC-FDMA) symbols, and the like). Also, the slot may be a time unit based on the numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) transmitted in a time unit larger than the mini slot may be referred to as "PDSCH (PUSCH) mapping type A". A PDSCH (or PUSCH) transmitted using the mini slot may be referred to as "PDSCH (PUSCH) mapping type B".

The radio frame, the subframe, the slot, the mini slot, and the symbol all represent the time unit in signal communication. The radio frame, the subframe, the slot, the mini slot, and the symbol may be called by other applicable names, respectively. Note that time units such as the frame, the subframe, the slot, the mini slot, and the symbol in the present disclosure may be interchangeable.

For example, one subframe may be referred to as a TTI, a plurality of consecutive subframes may be referred to as a TTI, or one slot or one mini slot may be referred to as a TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot," a "mini slot" and the like, instead of a "subframe".

Here, the TTI refers to the minimum time unit of scheduling in radio communication, for example. For example, in the LTE system, a base station performs scheduling to allocate radio resources (a frequency bandwidth, transmit power, and the like that can be used in each user terminal) to each user terminal in TTI units. Note that the definition of the TTI is not limited thereto.

The TTI may be the transmission time unit of channel-encoded data packets (transport blocks), code blocks, codewords, or the like, or may be the unit of processing in scheduling, link adaptation, or the like. Note that when the TTI is given, a time interval (for example, the number of symbols) in which the transport block, the code block, the codeword, or the like is actually mapped may be shorter than the TTI.

Note that, when one slot or one mini slot is referred to as a "TTI," one or more TTIs (that is, one or more slots or one or more mini slots) may be the minimum time unit of scheduling. Also, the number of slots (the number of mini slots) to constitute this minimum time unit of scheduling may be controlled.

A TTI having a time duration of 1 ms may also be referred to as a usual TTI (TTI in 3GPP Rel. 8 to 12), a normal TTI, a long TTI, a usual subframe, a normal subframe, a long subframe, a slot, or the like. A TTI shorter than the usual TTI may be referred to as a shortened TTI, a short TTI, a partial TTI (or fractional TTI), a shortened subframe, a short subframe, a mini slot, a subslot, a slot, or the like.

Note that the long TTI (for example, the usual TTI, subframe, or the like) may be replaced with a TTI having a time duration exceeding 1 ms, and the short TTI (for example, the shortened TTI or the like) may be replaced with a TTI having a TTI length less than the TTI length of the long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined based on the numerology.

Also, the RB may include one or more symbols in the time domain, and may be one slot, one mini slot, one subframe, or one TTI in length. One TTI, one subframe, and the like each may include one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource region of one subcarrier and one symbol.

A bandwidth part (BWP) (which may be referred to as a partial bandwidth or the like) may represent a subset of contiguous common resource blocks (RBs) for a given numerology in a given carrier. Here, the common RB may be specified by the index of the RB based on a common reference point of the carrier. The PRB may be defined in a given BWP and be numbered within the BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a given signal/channel outside the active BWP. Note that "cell", "carrier", and the like in the present disclosure may be replaced with "BWP".

Note that structures of the radio frame, subframe, slot, mini slot, symbol, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, information, a parameter, or the like described in the present disclosure may be represented in absolute values, represented in relative values with respect to given values, or represented by using other corresponding information. For example, the radio resource may be indicated by a given index.

Names used for the parameters and the like in the present disclosure are not restrictive names in any respect. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using a variety of different technologies. For example, data, instructions, commands, information, signals, bits, symbols, chips, and the like all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers or a direction from lower layers to higher layers. Information, signals, and the like may be input and output via a plurality of network nodes.

The information, signals, and the like that are input and output may be stored in a specific location (for example, in a memory), or may be managed in a control table. The information, signals, and the like to be input and output can be overwritten, updated, or appended. The output information, signals, and the like may be deleted. The information, signals, and the like that are input may be transmitted to other apparatuses.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Further, notification of given information (for example, notification of "being X") is not limited to explicit notification but may be performed implicitly (for example, by not performing notification of the given information or by performing notification of another piece of information).

Judging may be made in values represented by one bit (0 or 1), may be made in Boolean values that represent true or false, or may be made by comparing numerical values (for example, comparison with a given value).

Regardless of whether or not being referred to as software, firmware, middleware, a microcode, a hardware description language, or other names, software should be widely interpreted so as to mean an instruction, an instruction set, a code, a code segment, a program code, a program, a subprogram, a software module, an application, a software application, a software package, a routine, a subroutine, an object, an executable file, an execution thread, a procedure, a function, and the like.

Further, the software, instruction, information, and the like may be transmitted and received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology or the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small remote radio head (RRH) for indoors). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmitting apparatus, a receiving apparatus, a radio communication apparatus, and the like. Note that at least one of the base station or the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, the uplink channel, the downlink channel, and the like may be replaced with a side channel.

Similarly, the user terminal in the present disclosure may be replaced with a base station. In this case, the base station 10 may be configured to have the above-described functions of the user terminal 20.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined and applied (for example, a combination of LTE or LTE-A and 5G, and the like).

The term "based on" used in the present disclosure does not mean "only based on" unless otherwise specified. In other words, the phrase "based on" means both "only based on" and "based on at least"

Any reference to an element using designations such as "first" and "second" used in the present disclosure does not generally limit the amount or order of these elements. These designations can be used in the present disclosure, as a convenient way of distinguishing between two or more elements. In this way, reference to the first and second elements does not mean that only two elements may be employed, or that the first element has to precede the second element in some way.

The term "determining" as used in the present disclosure may include a wide variety of operations. For example, "determining" may be regarded as judging, calculating, computing, processing, deriving, investigating, looking up, search, inquiry (for example, looking up in a table, database, or another data structure), ascertaining, and the like.

Furthermore, "determining" may be regarded as receiving (for example, receiving of information), transmitting (for example, transmitting of information), inputting, outputting, accessing (for example, accessing data in a memory), and the like.

Further, "determining" may be regarded as resolving, selecting, choosing, establishing, comparing, and the like. That is, "determining" may be regarded as a given operation.

Furthermore, "determining" may be replaced with "assuming", "expecting", "considering", and the like.

The "maximum transmit power" described in the present disclosure may mean a maximum value of transmit power, nominal UE maximum transmit power, or rated UE maximum transmit power.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered to be "connected" or "coupled" to each other by using one or more electrical wires, cables, printed electrical connections, and the like, and, as some non-limiting and non-inclusive examples, by using electromagnetic energy and the like having wavelengths in the radio frequency, microwave, and optical (both visible and invisible) domains.

In the present disclosure, the phrase "A and B are different" may mean "A and B are different from each other". Note that the phrase may mean that "A and B are different from C". Terms such as "leave", "coupled", or the like may also be interpreted in the same manner as "different".

In a case where terms such as "include", "including", or a variation of these are used in the present disclosure, these terms are intended to be inclusive similarly to a case where "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

The scope of protection is defined by the claims.

## Claims

1. A terminal (20) comprising:
a control section (210) configured to determine order of hybrid automatic repeat request acknowledgement, HARQ-ACK, information bits, which correspond to a semi-static HARQ-ACK codebook including HARQ-ACK corresponding to more than one physical downlink shared channel, PDSCH, of a semi-persistent scheduling, SPS, SPS PDSCH, in order of ascending order of an occasion of the SPS PDSCH, ascending order of an SPS configuration index, and ascending order of a serving cell index; and
a transmitting section (220) configured to transmit the HARQ-ACK information bits by using a physical uplink control channel, PUCCH.

2. A radio communication method for a terminal (20), comprising:
determining order of hybrid automatic repeat request acknowledgement, HARQ-ACK, information bits, which correspond to a semi-static HARQ-ACK codebook including HARQ-ACK corresponding to more than one physical downlink shared channel, PDSCH, of a semi-persistent scheduling, SPS, SPS PDSCH, in order of ascending order of an occasion of the SPS PDSCH, ascending order of an SPS configuration index, and ascending order of a serving cell index; and
transmitting the HARQ-ACK information bits by using a physical uplink control channel, PUCCH.

3. A base station (10) comprising:
a receiving section (120) configured to receive, using a physical uplink control channel, PUCCH, hybrid automatic repeat request acknowledgement, HARQ-ACK, information bits, which correspond to a semi-static HARQ-ACK codebook including HARQ-ACK corresponding to more than one physical downlink shared channel, PDSCH, of a semi-persistent scheduling, SPS, SPS PDSCH, wherein order of the HARQ-ACK information bits is determined in order of ascending order of an occasion of the SPS PDSCH, ascending order of an SPS configuration index, and ascending order of a serving cell index.

4. A system comprising a terminal (20) according to claim 1 and a base station (10) according to claim 3.

## Patentansprüche

1. Endgerät (20), umfassend:
eine Steuerungssektion (210), die konfiguriert ist, um die Reihenfolge der Informationsbits der hybriden automatischen Wiederholungsanforderungsbestätigung, HARQ-ACK, zu bestimmen, die einem semistatischen HARQ-ACK-Codebuch entsprechen, das HARQ-ACK einschließt, die mehr als einem physikalischen gemeinsam genutzten Downlink-Kanal, PDSCH, eines semipersistenten Schedulings, SPS, SPS PDSCH, entsprechen, in Reihenfolge einer aufsteigenden Reihenfolge einer Gelegenheit des SPS PDSCH, aufsteigender Reihenfolge eines SPS-Konfigurationsindexes und aufsteigender Reihenfolge eines Serving-Cell-Indexes; und
eine Übertragungssektion (220), die konfiguriert ist, um die HARQ-ACK-Informationsbits unter Verwendung eines physikalischen Uplink-Steuerungskanals, PUCCH, zu übertragen.

2. Funkkommunikationsverfahren für ein Endgerät (20), umfassend:
Bestimmen einer Reihenfolge von Informationsbits der hybriden automatischen Wiederholungsanforderungsbestätigung, HARQ-ACK, die einem semistatischen HARQ-ACK-Codebuch entsprechen, das HARQ-ACK einschließt, die mehr als einem physikalischen gemeinsam genutzten Downlink-Kanal, PDSCH, eines semipersistenten Schedulings, SPS, SPS PDSCH, entsprechen, in Reihenfolge einer aufsteigenden Reihenfolge einer Gelegenheit des SPS PDSCH, aufsteigender Reihenfolge eines SPS-Konfigurationsindexes und aufsteigender Reihenfolge eines Serving-Cell-Indexes; und
Übertragen der HARQ-ACK-Informationsbits unter Verwendung eines physikalischen Uplink-Steuerungskanals, PUCCH.

3. Basisstation (10), umfassend:
eine Empfangssektion (120), die konfiguriert ist, um unter Verwendung eines physikalischen Uplink-Steuerungskanals, PUCCH, Informationsbits der hybriden automatischen Wiederholungsanforderungsbestätigung, HARQ-ACK, zu empfangen, die einem semistatischen HARQ-ACK-Codebuch entsprechen, das HARQ-ACK einschließt, die mehr als einem physikalischen gemeinsam genutzten Downlink-Kanal, PDSCH, eines semipersistenten Schedulings, SPS, SPS PDSCH, entsprechen, wobei eine Reihenfolge der HARQ-ACK-Informationsbits in einer Reihenfolge einer aufsteigenden Reihenfolge einer Gelegenheit des SPS PDSCH, aufsteigender Reihenfolge eines SPS-Konfigurationsindexes und aufsteigender Reihenfolge eines Serving-Cell-Indexes bestimmt ist.

4. System, umfassend ein Endgerät (20) nach Anspruch 1 und eine Basisstation (10) nach Anspruch 3.

## Revendications

1. Terminal (20) comprenant :
une section de commande (210) configurée pour déterminer un ordre de bits d'information d'accusé de réception de demande de répétition automatique hybride, HARQ-ACK, qui correspondent à un livre de codes HARQ-ACK semi-statique incluant un HARQ-ACK correspondant à plus d'un canal physique partagé de liaison descendante, PDSCH, d'une planification semi-persistante, SPS, SPS PDSCH, dans l'ordre d'un ordre croissant d'une occasion du SPS PDSCH, d'un ordre croissant d'un indice de configuration SPS, et d'un ordre croissant d'un indice de cellule de service ; et
une section de transmission (220) configurée pour transmettre les bits d'informations HARQ-ACK en utilisant un canal physique de commande de liaison montante, PUCCH.

2. Procédé de communication radio pour un terminal (20), comprenant :
la détermination d'un ordre de bits d'information d'accusé de réception de demande de répétition automatique hybride, HARQ-ACK, qui correspondent à un livre de codes HARQ-ACK semi-statique incluant un HARQ-ACK correspondant à plus d'un canal physique partagé de liaison descendante, PDSCH, d'une planification semi-persistante, SPS, SPS PDSCH, dans l'ordre d'un ordre croissant d'une occasion du SPS PDSCH, d'un ordre croissant d'un indice de configuration SPS, et d'un ordre croissant d'un index de cellule de service ; et
la transmission des bits d'informations HARQ-ACK à l'aide d'un canal physique de commande de liaison montante, PUCCH.

3. Station de base (10) comprenant :
une section de réception (120) configurée pour recevoir, en utilisant un canal physique de commande de liaison montante, PUCCH, des bits d'information d'accusé de réception de demande de répétition automatique hybride, HARQ-ACK, qui correspondent à un livre de codes HARQ-ACK semi-statique incluant un HARQ-ACK correspondant à plus d'un canal physique partagé de liaison descendante, PDSCH, d'une planification semi-persistante, SPS, SPS PDSCH, dans lequel un ordre des bits d'informations HARQ-ACK est déterminé dans l'ordre d'un ordre croissant d'une occasion du SPS PDSCH, d'un ordre croissant d'un indice de configuration SPS, et d'un ordre croissant d'un indice de cellule de service.

4. Système comprenant un terminal (20) selon la revendication 1 et station de base (10) selon la revendication 3.
